(19) **Europäisches Patentamt / European Patent Office / Office européen des brevets**

(11) **EP 3 676 977 B1**

(12) **EUROPEAN PATENT SPECIFICATION**

(45) Date of publication and mention of the grant of the patent:
**17.09.2025 Bulletin 2025/38**

(21) Application number: **18756253.3**

(22) Date of filing: **24.08.2018**

(51) International Patent Classification (IPC):
**H04L 1/00** *(2006.01)*

(52) Cooperative Patent Classification (CPC):
**H04L 1/005; H04L 1/00**

(86) International application number:
**PCT/EP2018/072916**

(87) International publication number:
**WO 2019/042897 (07.03.2019 Gazette 2019/10)**

(54) **HYBRID DECODER FOR CODED SLOTTED ALOHA**

HYBRIDER DECODER FÜR CODIERTE ALOHA MIT ZEITSCHLITZEN

DÉCODEUR HYBRIDE POUR ALOHA CRÉNELÉ CODÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.08.2017 EP 17188125**

(43) Date of publication of application:
**08.07.2020 Bulletin 2020/28**

(73) Proprietor: **Fraunhofer-Gesellschaft zur Förderung der angewandten Forschung e.V.
80686 München (DE)**

(72) Inventors:
• **ROBERT, Jörg**
  **91080 Uttenreuth (DE)**
• **NAFIE, Sally**
  **91058 Erlangen (DE)**

(74) Representative: **Schlenker, Julian
Schoppe, Zimmermann, Stöckeler
Zinkler, Schenk & Partner mbB
Patentanwälte
Radlkoferstraße 2
81373 München (DE)**

(56) References cited:
**WO-A1-03/107546**

• **ARASH SABER TEHRANI ET AL: "SigSag: Iterative Detection Through Soft Message-Passing", IEEE JOURNAL OF SELECTED TOPICS IN SIGNAL PROCESSING, IEEE, US, vol. 5, no. 8, 1 December 2011 (2011-12-01), pages 1512 - 1523, XP011372350, ISSN: 1932-4553, DOI: 10.1109/JSTSP.2011.2169042**
• **FENG GUO ET AL: "Low complexity non-binary LDPC and modulation schemes communicating over MIMO channels", 2004 IEEE 60TH VEHICULAR TECHNOLOGY CONFERENCE. VTC2004-FALL (IEEE CAT. NO.04CH37575) IEEE PISCATAWAY, NJ, USA, IEEE, vol. 2, 26 September 2004 (2004-09-26), pages 1294 - 1298, XP010786833, ISBN: 978-0-7803-8521-4, DOI: 10.1109/VETECF.2004.1400232**

**Description**

Embodiments relate to a receiver for receiving encoded data from a transmitter in a communication system having a plurality of transmitters. Further embodiments relate to a method for receiving encoded data from a transmitter in a communication system having a plurality of transmitters. Some embodiments relate to a hybrid decoder for coded slotted ALOHA. Some embodiments relate to hybrid low density parity check codes - slotted ALOHA for ultra-low latency reliable communication.

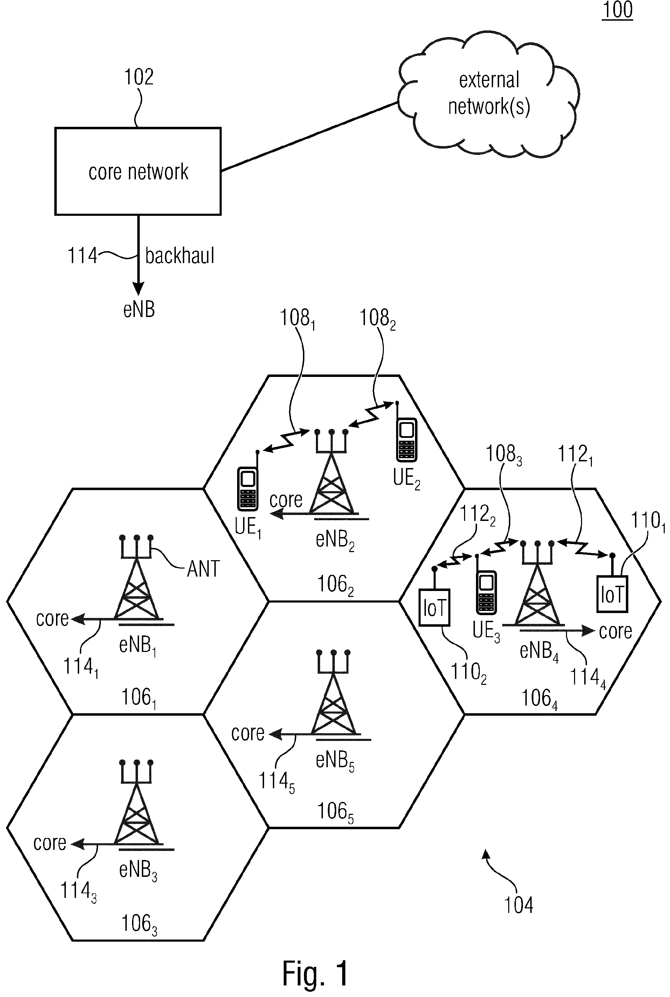

Fig. 1 is a schematic representation of an example of a wireless network 100 including a core network 102 and a radio access network 104. The radio access network 104 may include a plurality of base stations $eNB_1$ to $eNB_5$, each serving a specific area surrounding the base station schematically represented by respective cells $106_1$ to $106_5$. The base stations are provided to serve users within a cell. A user may be a stationary device or a mobile device. Further, the wireless communication system may be accessed by IoT devices which connect to a base station or to a user. The mobile devices or the IoT devices may include physical devices, ground based vehicles, such as robots or cars, aerial vehicles, such as manned or unmanned aerial vehicles (UAVs), the latter also referred to as drones, buildings and other items having embedded therein electronics, software, sensors, actuators, or the like as well as network connectivity that enable these devices to collect and exchange data across an existing network infrastructure. Fig. 1 shows an exemplary view of only five cells, however, the wireless communication system may include more such cells. Fig. 1 shows two users UE1 and UE2, also referred to as user equipment (UE), that are in cell $106_2$ and that are served by base station $eNB_2$. Another user $UE_3$ is shown in cell $106_4$ which is served by base station $eNB_4$. The arrows $108_1$, $108_2$ and $108_3$ schematically represent uplink/downlink connections for transmitting data from a user $UE_1$, $UE_2$ and $UE_3$ to the base stations $eNB_2$, $eNB_4$ or for transmitting data from the base stations $eNB_2$, $eNB_4$ to the users $UE_1$, $UE_2$, $UE_3$. Further, Fig. 1 shows two IoT devices $110_1$ and $110_2$ in cell $106_4$, which may be stationary or mobile devices. The IoT device $110_1$ accesses the wireless communication system via the base station $eNB_4$ to receive and transmit data as schematically represented by arrow $112_1$. The IoT device $110_2$ accesses the wireless communication system via the user $UE_3$ as is schematically represented by arrow $112_2$. The respective base station $eNB_1$ to $eNB_5$ are connected to the core network 102 via respective backhaul links $114_1$ to $114_5$, which are schematically represented in Fig. 1 by the arrows pointing to the "core". The core network 102 may be connected to one or more external networks.

For data transmission a physical resource grid may be used. The physical resource grid may comprise a set of resource elements to which various physical channels and physical signals are mapped. For example, the physical channels may include the physical downlink and uplink shared channels (PDSCH, PUSCH) carrying user specific data, also referred to as downlink and uplink payload data, the physical broadcast channel (PBCH) carrying for example a master information block (MIB) and a system information block (SIB), the physical downlink and uplink control channels (PDCCH, PUCCH) carrying for example the downlink control information (DCI), etc. For the uplink, the physical channels may further include the physical random access channel (PRACH or RACH) used by UEs for accessing the network once a UE synchronized and obtained the MIB and SIB. The physical signals may comprise reference signals (RS), synchronization signals and the like. The resource grid may comprise a frame having a certain duration, like 10 milliseconds, in the time domain and having a given bandwidth in the frequency domain. The frame may have a certain number of subframes of a predefined length, e.g., 2 subframes with a length of 1 millisecond. Each subframe may include two slots of 6 or 7 OFDM symbols depending on the cyclic prefix (CP) length.

The wireless communication system may be any single-tone or multicarrier system based on frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like non-orthogonal waveforms for multiple access, e.g. filter-bank multicarrier (FBMC), generalized frequency division multiplexing (GFDM) or universal filtered multi carrier (UFMC), may be used. The wireless communication system may operate, e.g., in accordance with the LTE-Advanced pro standard or the 5G or NR (New Radio) standard.

Data may also be communicated over channels of a wired communication network or a combination of wired and wireless networks, for example, a local area network (LAN), a G.hn network operating over different types of wires like telephone wires, coaxial cables and/or power lines, or a wide area network (WAN) such as the internet.

The vibrant invasion of the Internet of Things (IoT) is taking the world by storm. The future 5G will witness a vast domination of Machine to Machine (M2M) technology in scientific, medical, and control telemetry fields. Unlike the conventional existing standards, M2M communication is mainly featured with the massive number of transmitting devices that share the wireless medium. The amount of data transmitted per device is typically of order of few bytes. Because M2M scenarios require low latency, scheduling techniques have to be refrained from due to the huge overhead they induce over the transmitted packets. As a result, random access schemes present themselves as excellent candidates that can meet the low latency requirements of M2M.

A paradigm of the proliferated random access schemes is the ALOHA mechanism which allows for an uncoordinated access of the transmitting devices to the shared wireless medium. This uncoordinated access leads to collisions between the transmitted packets. Numerous variants have been presented in the literature to tackle the problem of collided packets. These variants descend from the idea of combining diversity with ALOHA mechanism. They can be classified into two main categories; unslotted and slotted ALOHA. On the one hand, the unslotted ALOHA presented in [1], [2] assumes an asynchronous TDMA system in an attempt to make use of the partial collision. On the other hand, the Slotted ALOHA (SA) assumes a synchronized system where the transmission slots are either fully collided or collision free. The work presented in [3],[4] exploits the enhancement of the SA mechanism through the deployment of multiple receive antennas. Another perspective presented in [5], [6], and [7] focuses on Physical layer Network Coding (PNC) and Multi-User Detection (MUD).

Diversity Slotted ALOHA (DSA) is a slight variant of SA where each device transmits replicas of the same packet in an attempt to increase the probability of successful decoding. Contention Resolution Diversity Slotted ALOHA (CRDSA) [8] is a decoding mechanism that combines DSA and Successive Interference Cancellation (SIC). In [9], the analogy between the CRDSA decoding, and the iterative decoding of graph based codes is described. Moreover, the idea of Irregular Repetition Slotted ALOHA (IRSA) is presented. IRSA is then further exploited in [10], [11]. The spatial, temporal, and spatio-temporal base station cooperation of CRDSA is presented in [12]. [13] , [14] introduce Frameless ALOHA, where the idea of rateless codes is applied to SA. Further evaluation on the probability distribution of the number of repeated replicas per device of the IRSA is presented in [15].

Another trending approach is the deployment of Non-Orthogonal Multiple Access (NOMA) based on SA. The NOMA scheme applies SIC at the User Equipment (UE) receiver side in order to resolve the intra-cell and/or inter-cell interference caused due to the utilization of non-orthogonal transmission at the transmitter side [16]. It makes use of the received users' power variation resulting from the power domain multiplexing. The SIC mitigates the interference caused by one user to the remaining users under the constraint that the packet of this interfering user is decodable. The algorithm cannot be triggered if it fails to decode a packet to start with.

Drifting towards a more robust transmission, the idea of Coded Slotted ALOHA (CSA) is introduced. [17], [18] suggest the replacement of Repetition Codes by Linear Block Codes. [19] adopts the deployment of Analog Fountain Codes. The SigSag mechanism presented in [20] incorporates a bit-level Low density Parity check Code (LDPC), and a packet level repetition code.

Therefore, it is the object of the present invention to improve the transmission reliability of future communication networks having an increasing number of users and therefore an increasing number of collisions.

This object is solved by the independent claims.

Advantageous implementations are addressed in the dependent claims.

Embodiments provide a receiver for receiving encoded data from a transmitter in a communication system having a plurality of transmitters. The receiver comprises a decoder having a demodulator. The demodulator is configured to demodulate a received signal (e.g., a sequence of received symbols), to obtain a sequence of received symbols, at least a subset of received symbols of the sequence of received symbols having information from transmissions from a plurality of transmitters (e.g., collided bits). The decoder is configured to reconstruct an encoded data bit sequence into which the data from the transmitter is coded based on the sequence of received symbols and based on error correcting bits corresponding to an error correction code with which the data is encoded, by, for each bit of the encoded data bit sequence,

in a first part of an iteration step,

determining a first probability information describing a reliability of the bit of the encoded data bit sequence given a corresponding received symbol of the sequence of received symbols, and

determining a second probability information describing probabilities that the bit of the encoded data bit sequence fulfills corresponding error correcting bits of the error correcting code;

in a second part of the iteration step,
determining, based on the first probability information and the second probability information, a third probability information describing a probability that the current bit of the encoded data bit sequence corresponds to an actual bit of the encoded data bit sequence as transmitted by the transmitter.

According to the concept of the present invention, in a communication system with overlapping transmissions from a plurality of transmitters, an encoded data bit sequence into which the data from one of the transmitters is encoded can be reconstructed, by iteratively updating, the first probability information (describing a reliability of the bit of the encoded data bit sequence given a corresponding received symbol of the sequence of received symbols), the second probability information (describing probabilities that the bit of the encoded data bit sequence fulfills corresponding error correcting bits of the error correcting code) and the third probability information (describing a probability that the current bit of the encoded data bit sequence corresponds to an actual bit of the encoded data bit sequence as transmitted by the transmitter) based on each other.

For example, both, the first probability information (describing a reliability of the bit of the encoded data bit sequence given a corresponding received symbol of the sequence of received symbols) and the second probability information (describing probabilities that the bit of the encoded data bit sequence fulfills corresponding error correcting bits of the error correcting code) can be iteratively updated based on the third probability information (describing a probability that the current bit of the encoded data bit sequence corresponds to an actual bit of the encoded data bit sequence as transmitted by the transmitter), wherein the third probability information can be iteratively updated based on the first probability information and the second probability information.

Further embodiments provide a method for receiving encoded data from a transmitter in a communication system having a plurality of transmitters, the method comprising:

- demodulating a received signal, to obtain a sequence of received symbols, at least a subset of received symbols of the sequence of received symbols having information from transmissions from a plurality of transmitters;

- reconstructing an encoded data bit sequence into which the data from the transmitter is coded based on the sequence of received symbols and based on error correcting bits corresponding to an error correction code with which the data is encoded, by, for each bit of the encoded data bit sequence,

  in a first part of an iteration step,

    determining a first probability information describing a reliability of the bit of the encoded data bit sequence given a corresponding received symbol of the sequence of received symbols, and

    determining probability information describing probabilities that the bit of the encoded data bit sequence fulfills corresponding error correcting bits of the error correcting code;

  in a second part of the iteration step,
  determining, based on the first probability information and the second probability information, a third probability information describing a probability that the current bit of the encoded data bit sequence corresponds to an actual bit of the encoded data bit sequence as transmitted by the transmitter.

Embodiments of the present invention are described herein making reference to the appended drawings.

Fig. 1    shows a schematic representation of an example of a wireless communication system;

Fig. 2    shows a schematic block diagram of a receiver for receiving encoded data from a transmitter in a communication system having a plurality of transmitters, according to an embodiment;

Fig. 3    shows a schematic block diagram of a communication system comprising a receiver and a plurality of transmitters sharing a communication medium, according to an embodiment;

Fig. 4    shows a tanner graph representation of the hybrid decoder of the receiver for receiving encoded data from a transmitter in a communication system having a plurality of transmitters, according to an embodiment;

Fig. 5    shows a tanner graph representation of a hybrid LDPC-SA with two users, rate 1/2 LDPC code, and six time slots;

Fig. 6    shows in a diagram a PER of the joint decoding (i.e., hybrid decoding) of hybrid LDPC-SA compared to the conventional sequential decoding, both for a (4320,2160) LDPC code with BPSK modulation transmitted over a contention SA channel with 8640 time slots with a channel load of D= {0.25,0.5,0.75,1,1.25,1.5,1.75,2} over Rayleigh fading and AWGN;

Fig. 7    shows a flowchart of a method for receiving encoded data from a transmitter in a communication system having a plurality of transmitters, according to an embodiment;

Fig. 8    is a schematic representation of a wireless communication system for transmitting information from a transmitter to a receiver; and

Fig. 9    illustrates an example of a computer system on which units or modules as well as the steps of the methods described in accordance with the inventive approach may execute.

Equal or equivalent elements or elements with equal or equivalent functionality are denoted in the following description by equal or equivalent reference numerals.

In the following description, a plurality of details are set forth to provide a more thorough explanation of embodiments of the present invention. However, it will be apparent to one skilled in the art that embodiments of the present invention may be practiced without these specific details. In other instances, well-known structures and devices are shown in block diagram form rather than in detail in order to avoid obscuring embodiments of the present invention. In addition, features of the different embodiments described hereinafter may be combined with each other, unless specifically noted otherwise.

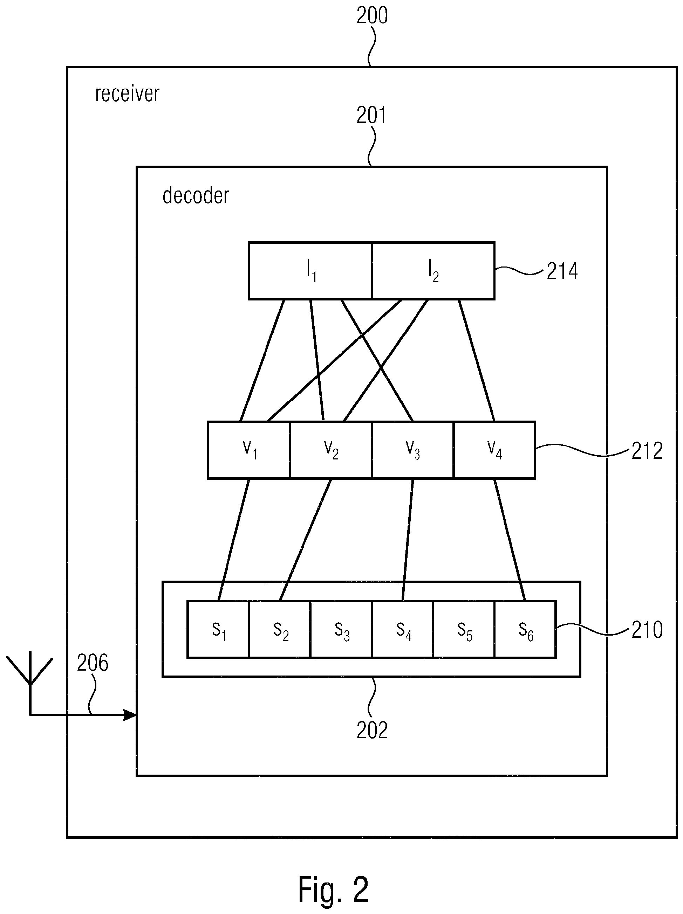

Fig. 2 shows a schematic block diagram of a receiver 200 for receiving encoded data from a transmitter in a communication system having a plurality of transmitters. The receiver 200 comprises a decoder 201 having a demodulator 202.

The demodulator 202 is configured to demodulate a received signal 206, to obtain a sequence 210 of received symbols $s_1$ to $s_6$, wherein at least a subset of received symbols of the sequence 210 of received symbols has information from transmissions from a plurality of transmitters (e.g., from the transmitter and at least one other transmitter).

For example, the received signal 206 can comprise a sequence of received symbols, wherein the receiver (e.g., a demodulator) can be configured to demodulate the sequence of received symbols to obtain the sequence 210 of received symbols $s_1$ to $s_6$.

Thereby, a subset of received symbols of the sequence 210 of received symbols may correspond to the transmission of the transmitter, wherein a subset of received symbols of the sequence 210 of received symbols may correspond to the transmission of at least one other transmitter. For instance, the received symbols $s_1$, $s_2$, $s_4$ and $s_6$ of the sequence 210 of received symbols may correspond to the transmission of the transmitter, wherein the received symbols $s_2$, $s_4$, $s_5$, $s_6$ of the sequence 210 of received symbols may correspond to the transmission of another transmitter. In this example, the received symbols $s_2$, $s_4$ and $s_6$ of the sequence 210 of received symbols have information from transmissions from the transmitter and another transmitter, i.e. received symbols $s_2$, $s_4$ and $s_6$ are collided symbols.

The decoder 201 can be configured to reconstruct an encoded data bit sequence 212 into which the data from the transmitter is coded based on the sequence 210 of received symbols $s_1$ to $s_6$ (or more precisely, based on the received symbols of the sequence 210 of received symbols corresponding to the transmission of the transmitter, e.g., based on received symbols $s_1$, $s_2$, $s_4$ and $s_6$) and based on error correcting bits $l_1$ and $l_2$ 214 corresponding to an error correction code with which the data from the transmitter is coded.

In detail, the decoder 201 can be configured to reconstruct, in a first part of an iteration step, the encoded data bit sequence 212 by, for each bit $v_i$ ($\forall i=1,...,n$) of the encoded data bit sequence 212, determining

- a first probability information (e.g., LLR values) describing a reliability of the bit $v_i$ (e.g., $v_1$ or $v_3$) of the encoded data bit sequence 212 given a corresponding received symbol (e.g., $s_1$ or $s_4$) of the sequence 210 of received symbols, and
- a second probability information (e.g., LLR values) describing probabilities that the bit $v_i$ (e.g., $v_1$ or $v_3$) of the encoded data bit sequence fulfills corresponding error correcting bits 214 (e.g., $l_1$ and $l_2$) of the error correcting code.

For example, in the first part of the iteration step, the decoder 201 can be configured to reconstruct the encoded data bit sequence 212 by determining the first probability information describing a reliability of the bit $v_i$ (e.g., of the coded bit $v_1$ for received symbol $s_1$, or of the encoded bit $v_3$ for received symbol $s_4$) of the encoded data bit sequence 212 given a corresponding received symbol (e.g., received symbol $s_1$ or received symbol $s_4$) of the sequence 210 of received symbols. Further, in the first part of the iteration step, the decoder 201 can be configured to reconstruct the encoded data bit sequence 212 by determining the second probability information describing probabilities that the bit $v_i$ (e.g., coded bit $v_1$ or coded bit $v_3$) of the encoded data bit sequence 212 fulfills corresponding error correcting bits 214 (e.g., probabilities that coded bit $v_1$ fulfills error correcting bits $l_1$ and $l_2$, or probabilities that coded bit $v_2$ fulfills error correcting bits $l_1$ and $l_2$) of the error correcting code.

Further, the decoder 201 can be configured to reconstruct, in a second part of the iteration step, the encoded data bit sequence 212 by, for each bit $v_i$ ($\forall i=1,...,n$) of the encoded data bit sequence 212 determining, based on the first probability information and the second probability information,

- a third probability information (e.g., LLR values) based on the first probability information and the second probability information, the third probability information describing a probability that the current bit $v_i$ (e.g., $v_1$ or $v_3$) of the encoded data bit sequence corresponds to an actual bit of the encoded data bit sequence as transmitted by the transmitter.

Note that, the iteration step can be iteratively repeated, each of the iteration steps having the first part of the iteration step and the second part of the iteration step.

Note that, when iteratively repeating the above described iteration step, in a first iteration step, in the first part of the first iteration step,

- the first probability information can be determined, for example, by calculating the reliability of the bit $v_i$ (e.g., $v_1$ or $v_3$) of the encoded data bit sequence 212 given a corresponding received symbol (e.g., $s_1$ or $s_4$) of the sequence 210 of received symbols, and
- the second probability information can be determined, for example, by calculating probabilities that the bit $v_i$ (e.g., $v_1$ or $v_3$) of the encoded data bit sequence fulfills corresponding error correcting bits 214 (e.g., $l_1$ and $l_2$) of the error correcting code,

and in the second part of the first iteration step,

- the third probability information can be determined, for example, by calculating the third probability information based on the first probability information and the second probability information.

Further, in a second iteration step and every following iteration step, following the first iteration step, in the first part of the corresponding iteration step,

- the first probability information can be determined, for example, by updating the first probability information based on the third probability information, and
- the second probability information can be determined, for example, by updating the second probability information based on the third probability information

and in the second part of the corresponding iteration step,

- the third probability information can be determined, for example, by updating the third probability information based on the first probability information and the second probability information.

Thereby, the decoder 201 can be configured to repeat the iteration steps until reconstructed predefined termination criterion is reached or until a predefined number of iteration steps is reached.

For example, the predefined termination criterion can specify that the error correcting bits of the error correcting code are fulfilled, for example, according to classical LDPC.

Subsequently, embodiments of the receiver 200 are described making reference to a communication system using slotted ALOHA (SA) as channel access mode and LDPC (=low density parity check code) as error correcting code. Naturally, the following description is also applicable to embodiments of the receiver 200 using another channel access mode and/or another error correcting code incorporating iterative decoding, such as non-binary LDPC.

Thereby, the decoder 201 of the receiver 200 is referred to as hybrid LDPC SA decoder, jointly perform SA and LDPC decoding, i.e. hybrid LDPC SA decoding is joint decoding of LPPC and SA.

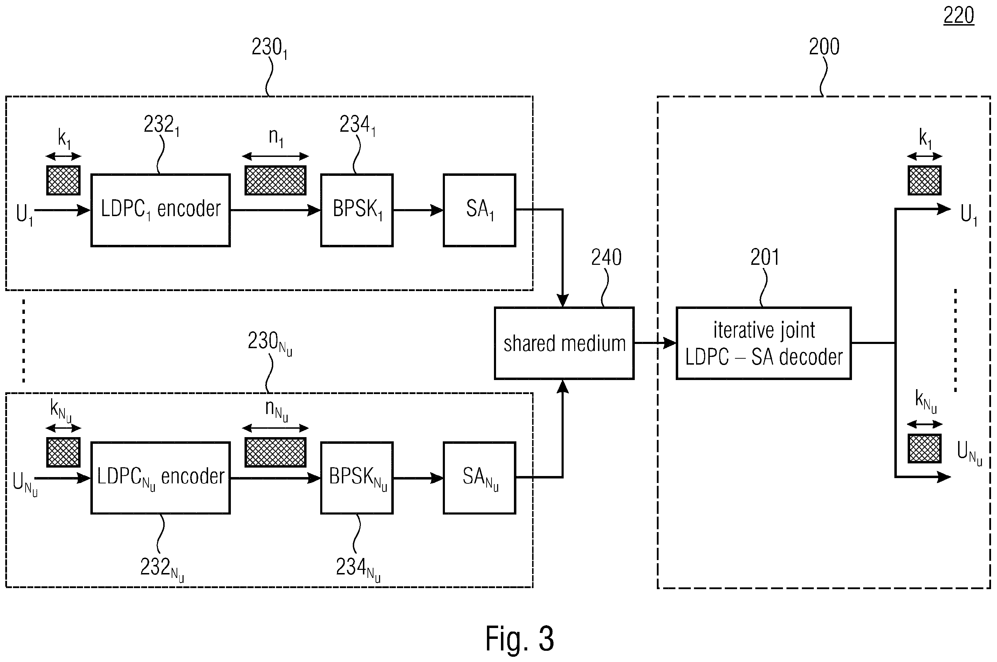

Fig. 3 shows a schematic block diagram of a communication system comprising a receiver 200 and a plurality of transmitters 230, to $230_{Nu}$ sharing a communication medium 240, according to an embodiment. As shown in Fig. 3, each of the plurality of transmitters $230_1$ to $230_{Nu}$ comprises a LDPC encoder $232_1$ to $232_{Nu}$ configured to LDPC encode data (e.g., an information packet of length k) to obtain encoded data (e.g., an encoded data bit sequence of length n), and a modulator $234_1$ to $234_{Nu}$ configured to modulate (e.g., using binary phase shift keying (BPSK)) the encoded data to obtain a sequence of symbols, wherein each of the plurality of transmitters $230_1$ to $230_{Nu}$ is configured to randomly select slots for transmitting its sequence symbols over the shared medium 240. The random selection of slots results in simultaneous transmissions of symbols by different transmitters in at least some of the slots of the shared medium 240, leading to collisions. The receiver 200 comprises a hybrid decoder 201 (iterative joint LDPC - SA decoder) configured to concurrently perform both, SA demodulating (as performed by the demodulator 202 in Fig. 2) and LDPC decoding (as performed by the decoder 201 in Fig. 2), thereby resolving these collisions.

In other words, the hybrid LDPC-SA system block diagram is shown in Fig. 3. The system incorporates $N_u$ users $230_1$ to $230_{Nu}$ sharing the SA wireless medium 240. Each user $U_i \forall i = 1, \cdots, N_u$ may have an information packet of length $k_i$ bits. Every user's packet can be encoded with an LDPC encoder of code rate $r_i = k_i/n_i$ producing an output codeword of length $n_i$. Without loss of generality, the encoded bits can be mapped, for example, to binary PSK modulated symbols. Prior to transmission, each user randomly and independently chooses $n_i$ time slots to transmit its modulated encoded codeword. Let $N_s$ denote the total number of available time slots per SA frame. In this case, the channel load; defined as the number of useful information bits per time slot is given by $D = \sum_{i=1}^{N_u} k_i / N_s$.

In embodiments, the transmitted symbols are faded by the Rayleigh fading coefficients and perturbed by the additive white Gaussian noise. Due to the random selection of SA, some slots are collision free while others suffer from collision. The received signal at a contended slot corresponds to the superposition of the faded collided symbols added to the AWGN. At the receiver side, a joint decoding of the SA contended LDPC codewords is performed iteratively. Further details on the proposed iterative joint decoder are described below.

For explanation purposes, in the below description, the joint decoder 201 is modeled on a bipartite graph. The idea is inspired from the Tanner Graph decoding of graph based codes such as LDPC. Naturally, also any other representation, such as a matrix representation, could be used.

As mentioned before, the iterative decoding of CRDSA was first proposed in [2]. Furthermore, the SigSag algorithm introduced the sequential decoding of LDPC encoded codewords transmitted over SA through two cascaded Tanner graphs; one for SA, and the other for LDPC. In the SigSag algorithm, the Tanner graph for SA comprises SA check nodes and variable nodes. Meanwhile, the LDPC Tanner graph comprises variable nodes and LDPC check nodes.

Thus, cascading the two Tanner graphs results in a 3 level Tanner Graph with the variable nodes in the middle surrounded by the SA check nodes and the LDPC check nodes. However, the iterative decoding mechanism proposed therein is done on a sequential basis. It first starts by an iterative message passing algorithm between the SA check nodes and the variable nodes. After a predefined number of iterations, the transfer of information between the SA check nodes and variable nodes is terminated and the iterative belief propagation between the variable nodes and the LDPC check nodes starts. This is the key difference between the sequential SigSag algorithm and the joint hybrid decoder proposed herein. The iterative decoding is concurrently held among the variable nodes, SA, and LDPC check nodes.

In contrast to the sequential decoders presented in the literature, embodiments provide a decoder or decoding algorithm performing a joint decoding of both SA and LDPC. Unlike the serial concatenation of the two Tanner Graphs in the SigSag algorithm, the decoder 201 incorporates a parallel two layer Tanner Graph that allows for the joint decoding.

Hybrid LDPC-SA on Tanner Graphs

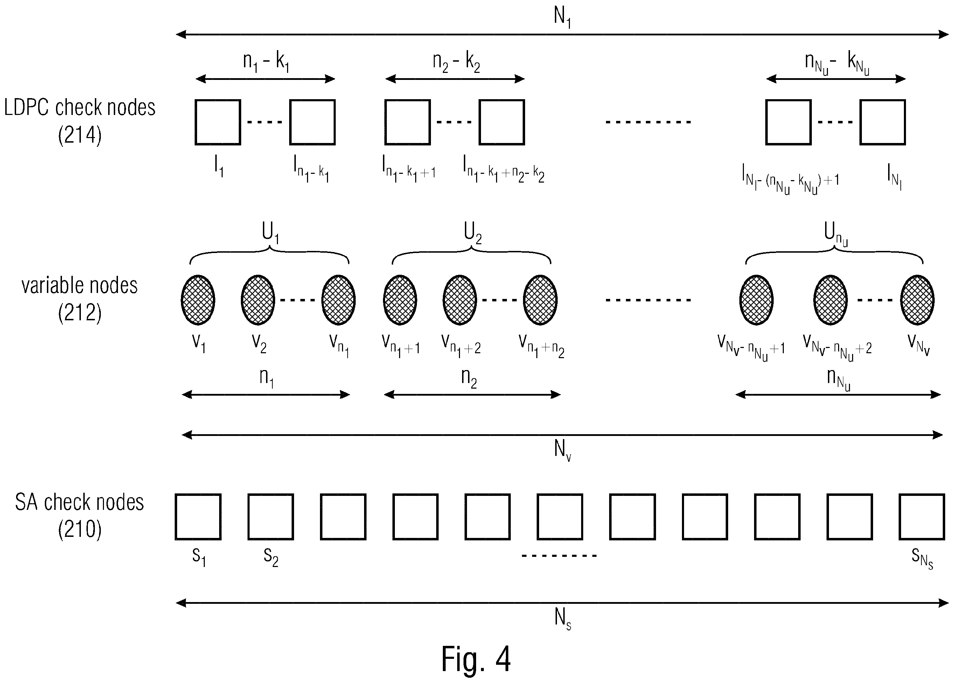

Fig. 4 shows a tanner graph representation of the hybrid decoder 201 of the receiver 200 for receiving encoded data from a transmitter in a communication system having a plurality of transmitters. Thereby, the difference between Figs. 2 and 4 is the number of users, Fig 2 is a Hybrid LDPC-SA decoder that decodes 1 user, while Fig.4 shows the decoder of $N_u$ users. In Fig. 4, the demodulator 202 (see Fig. 2) configured to provide the sequence 210 of received symbols is represented by receiver check nodes $s_1$ to $s_{N_s}$, wherein the encoded data bit sequence 212 (see Fig. 2) is represented by variable nodes $v_1$ to $v_{N_v}$, and wherein the error correcting code (see Fig. 2) is represented by error correction check nodes 214 $l_1$ to $l_{N_l}$.

In other words, assuming a system with $N_u$ users, the corresponding Tanner Graph is shown in Fig. 4. The graph comprises a set of variable nodes 212 representing the transmitted symbols from all the users. These variable nodes 212 are bounded by two layers of check nodes 210,214. The first layer check nodes 210 corresponds to the time slots of the shared SA medium. The other layer of check nodes 214 is driven from the conventional parity check nodes used in the decoding of LDPC. Let $N_v$ denote the number of variable nodes 212. Each transmitted symbol is represented by a variable node. Thus, $N_v = \sum_{i=1}^{N_u} n_i$, where $n_i$ represents the number of transmitted symbols per user per SA frame. The SA check nodes 210 denoted by $N_s$ are allocated according to the available resources. The total number of LDPC check nodes 214 is given by $N_l = \sum_{i=1}^{N_u} (n_i - k_i)$. This corresponds to the summation of the number of check nodes of all the LDPC encoders of all the users.

In embodiments, the connections between the variable nodes 212 and the SA check nodes 210 depend on the random selection of the transmission time slots of each user. This means that a contended SA check node can be connected to more than one variable node. It is worth mentioning that the collided variable nodes at one SA check node belong to different users. A collision of a symbol (or a variable node) of a user with its own symbols is not possible. Meanwhile, the connections of the variable nodes to the LDPC check nodes are fully determined by the deployed LDPC encoder at each user transmit terminal. This is exactly the same as the conventional representation of LDPC codes on Tanner graphs.

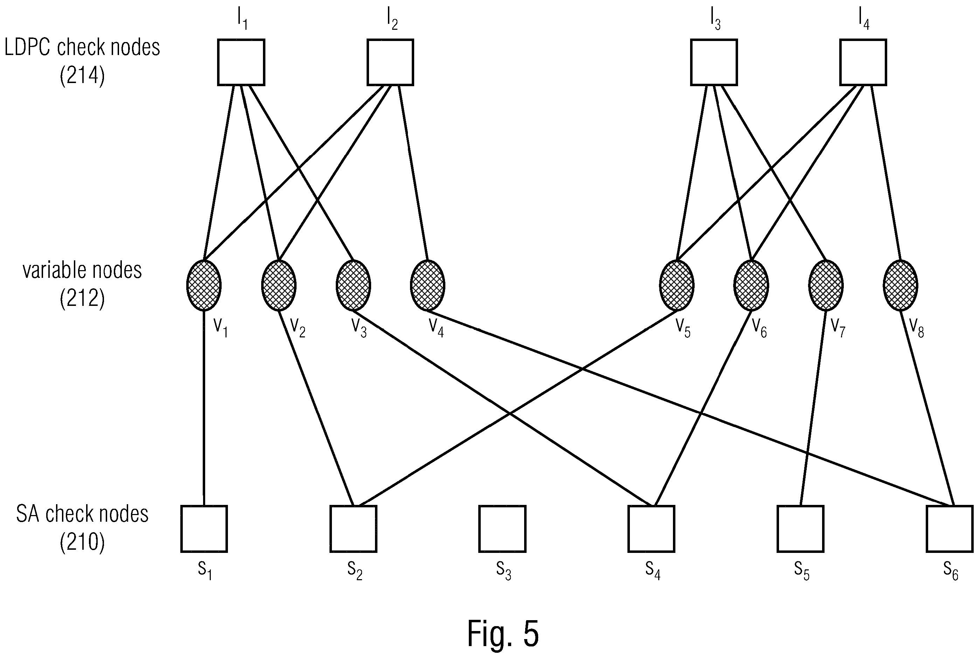

For a better understanding, consider a simple example of $N_u = 2$ users shown in Fig. 5. Each user outputs a data packet of length 2 bits, i.e. $k_1 = k_2 = 2$. For illustration purpose, it is assumed that the two users deploy identical rate 1/2 LDPC encoders with parity check matrix $H_1 = H_2 = \begin{bmatrix} 1 & 1 & 1 & 0 \\ 1 & 1 & 0 & 1 \end{bmatrix}$. The encoded codewords of length $n_1 = n_2 = 4$ bits are then BPSK modulated. The corresponding Tanner graph consists of $N_v = n_1 + n_2 = 8$ variable nodes 212. Assuming the SA frame consists of 6 time slots, the number of SA check nodes 210 is consequently $N_s = 6$. The number of LDPC check nodes 214 of each user is $n_1 - k_1 = n_2 - k_2 = 2$. Accordingly, the total number of LDPC check nodes 214 is $n_1 - k_1 + n_2 - k_2 = 4$.

Concerning the connections of variable nodes 212 to the SA check nodes 210, assume that user $U_1$ has randomly selected the 1st, 2nd, 4th, and 6th time slots. This means that the 4 variable nodes of $U_1$ are respectively connected to $s_1$, $s_2$,

$s_4$, and $s_6$. In a similar fashion, the 4 variable nodes 212 of $U_2$ are connected to $s_2$, $s_4$, $s_5$, and $s_6$. For the LDPC check nodes 214, each row in the parity check matrix of every user controls the connections of one check node to its corresponding variable nodes 212. User $U_1$ for example, has its first LDPC check node, $l_1$, connected to $v_1$, $v_2$, and $v_3$. Meanwhile, its second LDPC check node, $l_2$, is connected to $v_1$, $v_2$, and $v_4$.

## Iterative Joint LDPC-SA Decoding

In embodiments, the random access of each user to the shared SA frame results in collisions between the packets of different users. The objective of the decoder 201 is to resolve the contended packets through an iterative decoding scheme that is jointly carried out on both LDPC and SA levels. Each decoding iteration involves two message passing steps; check nodes to variable nodes, and variable nodes to check nodes.

## Check Nodes to Variable Nodes

In embodiments, in the first part of the iteration step, the first probability information can be transmitted (or passed) from the SA check nodes 210 to the variable nodes 212 and the second probability information can be transmitted (or passed) from the LDPC check nodes 214 to the variable nodes 212.
In other words, in the first half of the iteration, the SA check nodes 210 and LDPC check nodes 214 calculate their provisioned first probability information and second probability information (e.g., LLR (log-likelihood ratios) values) and send them to their corresponding variable nodes 212. The LLR value transmitted from one check node 210,214 to its corresponding variable node 212 reflects the probability of the originally transmitted value represented by this variable node. This reliability can be measured at the check node conditional on the information it gets from the other variable nodes that it is connected to.

## SA Check Nodes to Variable Nodes

In embodiments, the SA check nodes 210 resemble the time slots of the SA frame. The uncontended slots may have information about a single uncollided bit of a user. Meanwhile, the contended slots may have contribution from more than one user. The extrinsic information transmitted from an SA check node 210 to its corresponding variable node 212 may represent the reliability of the possible value of the bit represented by this variable node. The LLR value $S_{j,i}$ transmitted from SA check node $s_j$ to variable node $v_i$ can be given, for example, by

$$S_{j,i} = ln\left(\frac{\sum_{x_i \in X_{j,1} \subset X_j} \left[P(y = y_j|x_i) \cdot P(x_i)\right]}{\sum_{x_l \in X_{j,0} \subset X_j} \left[P(y = y_j|x_i) \cdot P(x_i)\right]}\right) \tag{1}$$

wherein $y_j \forall j = 1, \cdots, N_s$ represents the channel received signal at SA time slot $j$, wherein $X_j \forall j = 1, \cdots, N_s$ is the set of possible vectors of all the collided bits at check node $s_j$, wherein $X_{j,1} \forall j = 1, \cdots, N_s$ is the set of possible vectors of all the collided bits at check node $s_j$ that assume the bit represented by variable node $v_i$ is a 1, wherein $X_{j,0} \forall j = 1, \cdots, N_s$ is the set of possible vectors of all the collided bits at check node $s_j$ that assume the bit represented by variable node $v_i$ is a 0, and wherein $P(x_i)$ is the apriori probability of the vector $x_i$.
In embodiments, in the first iteration step, all the possible combinations of collided bits can be equiprobable, i.e. $P(x_i) = 1/2^{(M_j-1)}$, where $M_j$ represents the number of collided users at time slot $j$. As the iterative algorithm proceeds, the SA check nodes 210 receive probability information (e.g. LLR values) from their corresponding variable nodes 212. Those received information (e.g. LLR values) can be used to compute the apriori probabilities of the messages to be transmitted from the SA check nodes 210 in the next iteration steps.

## LDPC Check Nodes to Variable Nodes

The Belief Propagation (BP) decoding of the LDPC codes [21] introduces the extrinsic information that is communicated between the variable and check nodes of classical LDPC Tanner graph. In the joint decoding of the hybrid LDPC-SA, the messages can be transmitted from the LDPC check nodes 214 to their corresponding variable nodes 212 are calculated the same way as the classical LDPC BP algorithm. The extrinsic information $L_{j,i}$ transmitted from LDPC check node $l_j$ to variable node $v_i$ may represent the LLR of the probability of the corresponding bit of $v_i$ that makes this check node $l_j$ satisfied. This extrinsic message can be given, for example, by

$$L_{j,i} = -2\,tanh^{-1}\left(\prod_{i'\in B_j, i'\neq i} tanh\left(-V_{j,i'}/2\right)\right) \qquad (2)$$

wherein $B_j\,\forall j = 1,\cdots,N_l$, represents the set of variable nodes connected to LDPC check node $l_j$, and wherein $V_{j,i'}\,\forall j = 1,\cdots,$ $N_l$, and $\forall i' = 1,\cdots,N_v$, represents the messages transmitted from variable node $v_{i'}$ to LDPC check node $l_j$.

Variable Nodes to Check Nodes

In embodiments, in the second part of the iteration step, the first probability information and the second probability information can be combined and processed at the variable nodes 212 resulting in a third probability information. The third probability information can be transmitted from the variable nodes 212 to both, the SA check nodes 210 and the error correction check nodes 214.

In embodiments, upon receiving the messages from the check nodes, the variable nodes 212 may calculate new messages to be transmitted to their corresponding check nodes in the next half of the iteration. These messages may represent the LLR of the probability of their currently held bits based on the information they gathered from their corresponding SA and LDPC check nodes. The key difference of the joint decoding algorithm is the simultaneous transmission of the variable nodes to both SA and LDPC check nodes. The variable nodes gather information from all their connected SA and LDPC check nodes. This information can be combined and processed at the variable node resulting in an updated information message to be transmitted back again to both SA and LDPC check nodes 210,214. The updated information is similar to the one presented in the BP decoding algorithm of classical LDPC codes but taking into account not only the messages received from LDPC check nodes 214, but also those from the SA check nodes 210. The information $V_{j,i}$ transmitted from variable node $v_i$ to either LDPC check node $l_j$ or SA check node $s_j$ can be given, for example, for variable nodes to LDPC check nodes, by

$$V_{j,i}^{(L)} = \sum_{j'\in A_i, j'\neq j} L_{j',i} + \sum_{j''\in C_i,} S_{j'',i} \qquad (3a)$$

and for variable nodes to SA check nodes, by

$$V_{j,i}^{(S)} = \sum_{j'\in A_i} L_{j',i} + \sum_{j''\in C_i, j''\neq j} S_{j'',i} \qquad (3b)$$

wherein $A_i\,\forall i = 1,\cdots,N_v$ represents the set of LDPC check nodes connected to variable node $v_i$, wherein $C_i\,\forall i = 1,\cdots,N_v$ represents the set of SA check nodes connected to variable node $v_i$.

In embodiments, the message passing algorithm may be repeated iteratively till all the contended users are resolved, or the maximum number of iterations is reached.

Note that, the above described algorithm (or code) including equations 1, 2 and 3 use the LLR domain only by way of example. Naturally, also any other domain could be used, such as a linear domain. In general, any other implementation that is mathematically equivalent and thus provides the same result may be used.

Preliminary Results

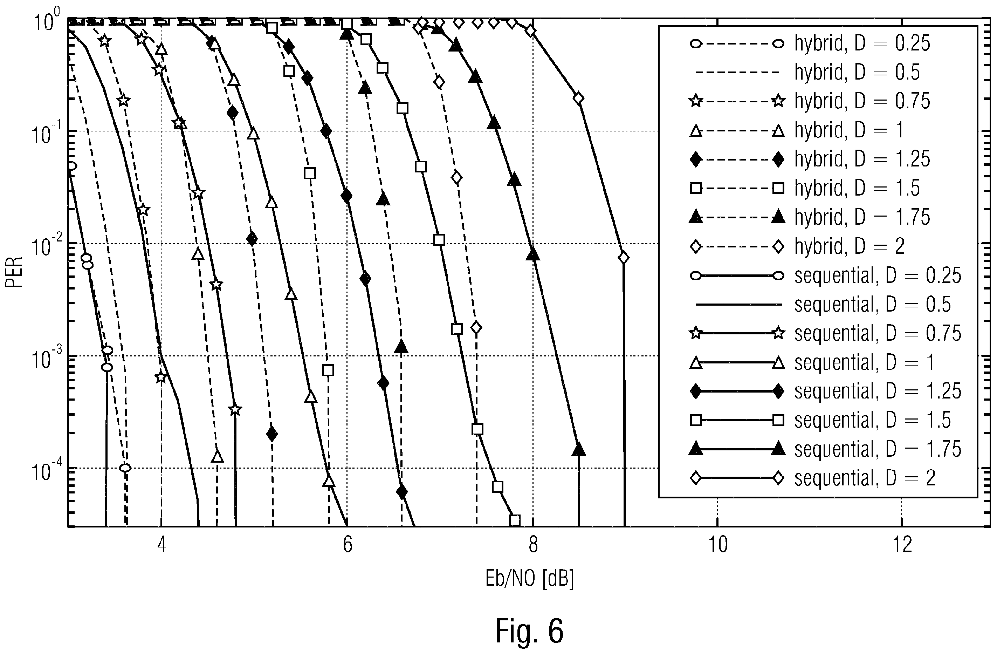

The performance of the proposed joint decoding of the hybrid LDPC-SA system was evaluated via Monte Carlo simulations. The deployed LDPC is a rate 1/2 code with codeword length n = 4320 bits taken from the Digital Video Broadcasting-Next Generation Handheld (DVB-NGH) Standard. Generally, any kind of LDPC code can be used. The SA frame includes $N_s$ = 8640 time slots. The number of users is $N_u$ = {1, 2, 3, 4, 5, 6} which corresponds to channel load $D$ = {0.25, 0.5, 0.75, 1, 1.25, 1.5, 2} respectively. The encoded codewords are modulated using BPSK, transmitted over a Rayleigh fading channel, and perturbed by AWGN of zero mean and variance $\sigma^2$. Fig. 6 shows the Packet Error Rate (PER) curves of the proposed hybrid LDPC-SA joint decoder plotted against $E_b/N_0$, wherein in Fig. 6 the ordinate denotes the PER and the abscissa Eb/N0 in dB. For illustration, the hybrid LDPC-SA intuitively means joint decoding. Thus, there is no sequential decoder for the Hybrid system. The performance of the Sequential Decoder under the same simulation environment is added for convenience. It is worth mentioning that a channel Load of D = 0.25 corresponds to a single user, i.e. a no-collision scenario. This means that both the hybrid and the sequential decoders have the same performance. As the channel load increases (and correspondingly the number of users), the PER increases, with the hybrid decoder significantly outperforming the sequential one. As depicted in the figure, at the PER of $10^{-4}$, the hybrid decoder outperforms the sequential one by around 2 dB. There is a provision for a drastic performance improvement if the slow Rayleigh fading channel is replaced by a block fading one.

Further embodiments

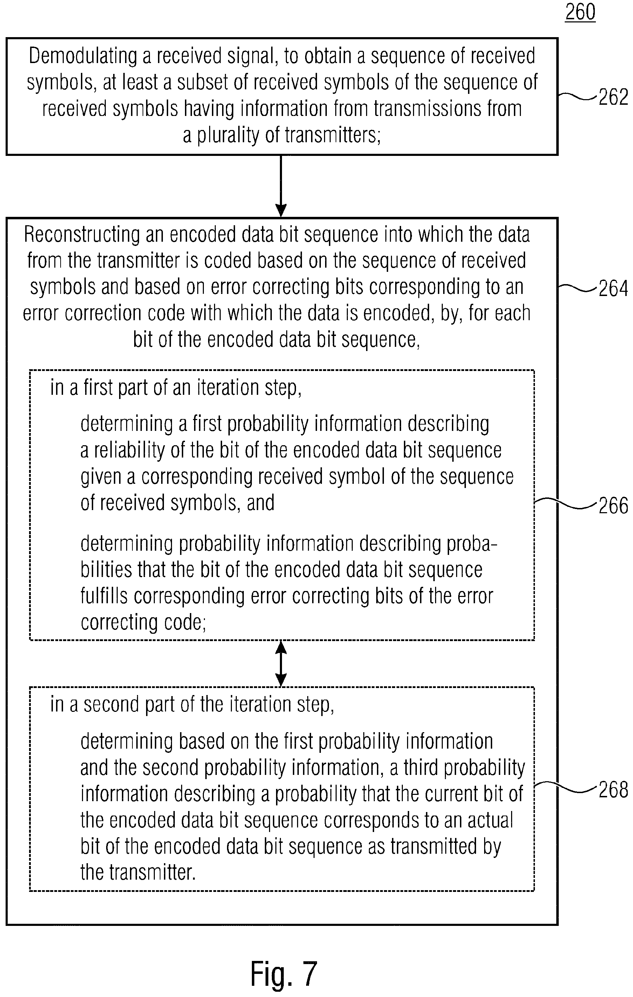

Fig. 7 shows a flowchart of a method for receiving encoded data from a transmitter in a communication system having a plurality of transmitters, according to an embodiment.

The method 260 comprises a step 262 of demodulating a received signal, to obtain a sequence of received symbols, at least a subset of received symbols of the sequence of received symbols having information from transmissions from a plurality of transmitters.

Further, the method 260 comprises a step 264 of reconstructing an encoded data bit sequence into which the data from the transmitter is coded based on the sequence of received symbols and based on error correcting bits corresponding to an error correction code with which the data is encoded, by, for each bit of the encoded data bit sequence,

in a first part 266 of an iteration step,

determining a first probability information describing a reliability of the bit of the encoded data bit sequence given a corresponding received symbol of the sequence of received symbols, and

determining probability information describing probabilities that the bit of the encoded data bit sequence fulfills corresponding error correcting bits of the error correcting code;

in a second part 268 of the iteration step,
determining, based on the first probability information and the second probability information, a third probability information describing a probability that the current bit of the encoded data bit sequence corresponds to an actual bit of the encoded data bit sequence as transmitted by the transmitter.

Embodiments provide a hybrid decoder for coded slotted ALOHA. The decoder is provisioned to meet the challenging requirements of the future Machine to Machine (M2M) Internet of Things (IoT) in the 5G standard. These challenges are mainly portrayed in a reliable robust communication with ultra-low latency. At the User Equipment (UE) terminal, a hybrid Low Density Parity Check (LDPC) encoder can be deployed, and the encoded codewords can be transmitted on the uplink channel using Slotted ALOHA (SA). While LDPC codes are chosen because of their near Shannon capacity performance, SA serves as a Random Access (RA) mechanism that guarantees the low-latency requirements. However, the incorporation of uncoordinated SA introduces collisions. The decoder described herein aims at resolving these collisions by means of a joint LDPC-SA hybrid decoder. Unlike the sequential decoders presented in the literature, the joint decoder described herein concurrently decodes the SA and LDPC blocks in a similar fashion to the Belief Propagation (BP) algorithm applied for LDPC codes. The preliminary results show that the proposed decoder significantly outperforms the state-of-the-art decoding schemes of CSA.

Embodiments provide a hybrid LDPC - SA scheme. Unlike the sequential decoding presented in [20], the hybrid decoder described herein uses a two level joint decoding. The concurrent decoding of LDPC and SA slots is provisioned to drastically outperform the sequential decoding method discussed in [20].

Embodiments provide a novel hybrid LDPC-SA decoder. The essence of the proposed algorithm lies in the joint decoding of SA and LDPC. Unlike the SigSag algorithm which applies a sequential iterative decoding over SA followed by iterative LDPC decoding, the decoding algorithm proposed herein applies a joint two level iterative decoding over both SA and LDPC. This joint decoding allows for the passing of valuable information between the SA check nodes and the LDPC check nodes through the common variable nodes. This valuable information traverses the two-level Tanner graph leading to faster convergence of the iterative decoding, or a higher probability of successful decoding given the same number of iterations. The SigSag model further discussed an iterative sequential decoding of the cascaded SA and LDPC decoders. This means that the decoder repeatedly applies an iterative SA decoder followed by an iterative LDPC decoder. However, their simulation results show that the performance of their proposed scheme deteriorates as the number of iterations over the cascaded blocks increases. They showed that the best decoding performance is achieved after one instance of the cascaded iterative decoder. This translates to the conventional sequential SA-LDPC decoder. The reason behind this performance deterioration evolves from the adoption of the SigSag algorithm to the combining of LDPC encoders on the bit level with a repetition code on the packet level. This combined coding scheme not only wastes the transmission resources, but also renders their iterative sequential decoding unpromising due to the evolved number of cycles in the Tanner graph.

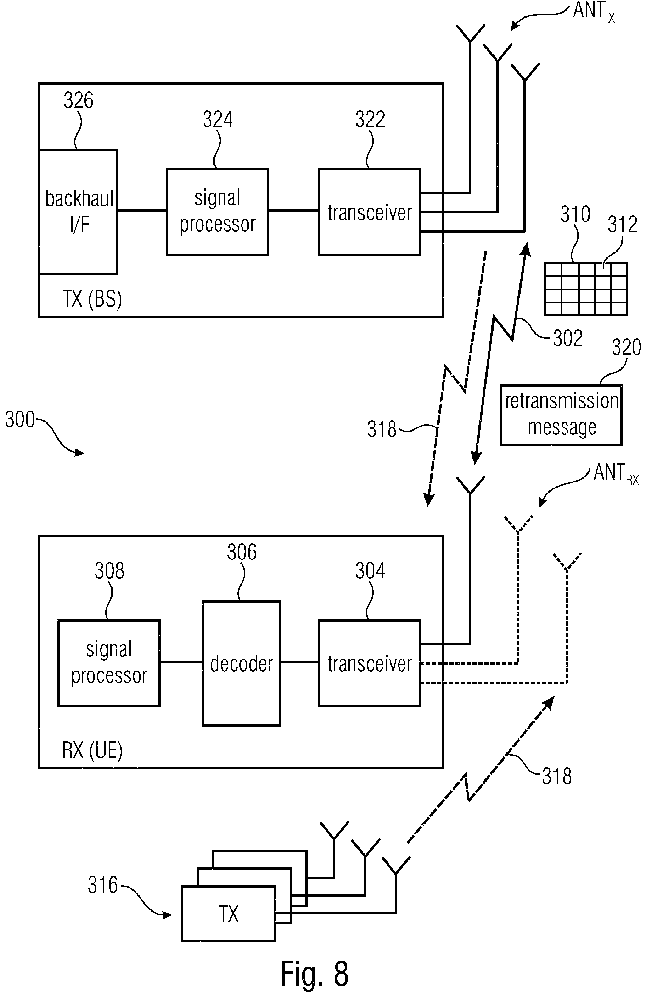

Embodiments of the present invention may be implemented in a wireless communication system as depicted in Fig. 1 including base stations, users, like mobile terminals or IoT devices. Fig. 8 is a schematic representation of a wireless communication system 300 for communicating information between a transmitter TX and a receiver RX and operating in accordance with embodiments of the inventive approach described above. The transmitter TX, e.g., the UE (or the bases station), includes one or more antennas ANTTX or an antenna array having a plurality of antenna elements. The receiver RX, e.g., the base station (or the UE), includes at least one antenna ANTRX. In other embodiments, the receiver RX may include more than one antenna. As is indicated by the arrow 302 signals are communicated between the transmitter TX and the receiver RX via a wireless communication link, like a radio link. The operation of the transmitter TX and the receiver RX and the signaling between the transmitter TX and the receiver RX is in accordance with the above described embodiments of the present invention.

For example, the receiver RX includes the one or more antennas ANTRX, a transceiver 304 coupled to the antenna, a decoder 306 and a processor 308. The transceiver 304 receives from the transmitter TX of the wireless communication network 300 a data block 310. The data block 310 includes encoded data transmitted on a plurality of resources 312 allocated to the receiver RX. The decoder 310 decodes the encoded data and determines for the allocated resources 312 whether decoding of the encoded data was successful or failed. The processor 308 evaluates whether one or more of the resources 312 for which the decoding failed are included in a report. The report indicates for the one or more allocated resources 312 that encoded data transmitted on the one or more of the allocated resources is not decodable, e.g., due to impairments, like puncturing, interference or a reduction of a signal strength, the resources may experience from the transmitter TX and/or from one or more further transmitters 316 of the wireless communication network 300 as is schematically represented at 318. The processor 308 causes the transceiver 304 to send a retransmission request 320 to the transmitter TX responsive to the evaluation.

In accordance with embodiments, the transmitter TX includes the one or more antennas ANTTX and a transceiver 322 coupled to the antenna ANTTX. The transceiver 322 communicates with one or more receivers RX of the wireless communication network 300. The one or more receivers RX are served by the transmitter TX. The transceiver 322 transmits to the one or more receivers RX the report 310. The report 310 indicates for one or more resources 312, which are allocated to the one or more receivers RX, that encoded data transmitted on the one or more of the allocated resources is not decodable. In accordance with embodiments, the transmitter TX may include a processor 324 which generates the report 310 based on information from the transmitter TX and/or from the one or more further transmitters 318. The information may indicate that data transmitted on certain resources is probably not decodable at the receiver. In embodiments in which also the information from the one or more further transmitters 318 is used for creating the report, the transmitter TX may include a backhaul interface 326 to the one or more further transmitters 318 of the wireless communication network 300.

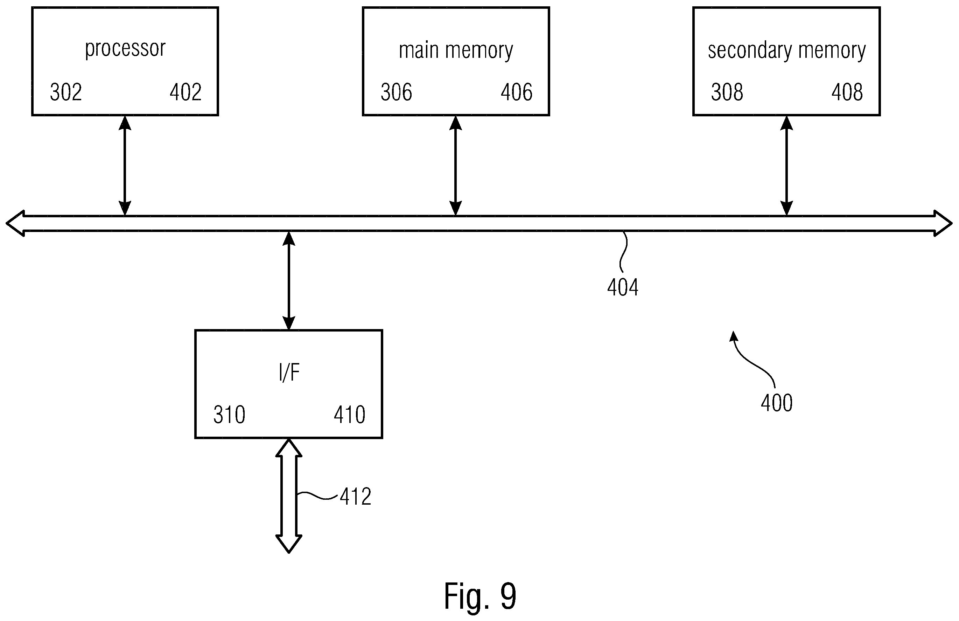

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 9 illustrates an example of a computer system 400. The units or modules as well as the steps of the methods performed by these units may execute on one or more computer systems 400. The computer system 400 includes one or more processors 402, like a special purpose or a general purpose digital signal processor. The processor 402 is connected to a communication infrastructure 404, like a bus or a network. The computer system 400 includes a main memory 406, e.g., a random access memory (RAM), and a secondary memory 408, e.g., a hard disk drive and/or a removable storage drive. The secondary memory 408 may allow computer programs or other instructions to be loaded into the computer system 400. The computer system 400 may further include a communications interface 410 to allow software and data to be transferred between computer system 400 and external devices. The communication may be in the form electronic, electromagnetic, optical, or other signals capable of being handled by a communications interface. The communication may use a wire or a cable, fiber optics, a phone line, a cellular phone link, an RF link and other communications channels 412.

The terms "computer program medium" and "computer readable medium" are used to generally refer to tangible storage media such as removable storage units or a hard disk installed in a hard disk drive. These computer program products are means for providing software to the computer system 400. The computer programs, also referred to as computer control logic, are stored in main memory 406 and/or secondary memory 408. Computer programs may also be received via the communications interface 410. The computer program, when executed, enable the computer system 400 to implement the present invention. In particular, the computer program, when executed, enable processor 402 to implement the processes of the present invention, such as any of the methods described herein. Accordingly, such a computer program may represent a controller of the computer system 400. Where the disclosure is implemented using software, the software may be stored in a computer program product and loaded into computer system 400 using a removable storage drive, an interface, like communications interface 410.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

List of References

[1] C. Kissling und F. Clazzer, "LDPC code performance and optimum code rate for Contention Resolution Diversity ALOHA," in IEEE Global Communications Conference (GLOBECOM), Atlanta, 2013.

[2] F. Clazzer und C. Kissling, "Enhanced Contention Resolution Aloha - ECRA," in Proceedings of 2013 9th International ITG Conference on Systems, Communication and Coding (SCC), Munich, 2013.

[3] A. Munari, F. Clazzer und G. Liva, "Multi-receiver Aloha systems - a survey and new results," in IEEE International Conference on Communication Workshop (ICCW), London, 2015.

[4] A. Munari, M. Heindlmaier und G. Liva, "The throughput of slotted aloha with diversity," in 51st Annual Allerton Conference on Communication, Control, and Computing (Allerton), Monticello, 2013.

[5] M. Khabbazian, F. Kuhn, N. Lynch, M. Médard und A. ParandehGheibi, "MAC design for analog network coding," FOMC '11 Proceedings of the 7th ACM ACM SIGACT/SIGMOBILE International Workshop on Foundations of Mobile Computing, pp. 42-51, 09 June 2011.

[6] L. Lu, L. You und S. C. Liew, "Network-Coded Multiple Access," IEEE Transactions on Mobile Computing, Bd. 13, Nr. 12, pp. 2853 - 2869, 2014.

[7] S. Pfletschinger, M. Navarro und G. Cocco, "Interference cancellation and joint decoding for collision resolution in slotted ALOHA," in International Symposium on Network Coding (NetCod), Aalborg, 2014.

[8] E. Casini, R. D. Gaudenzi und O. D. R. Herrero, "Contention Resolution Diversity Slotted ALOHA (CRDSA): An Enhanced Random Access Schemefor Satellite Access Packet Networks," IEEE Transactions on Wireless Communications, Bd. 6, Nr. 4, pp. 1408-1419, 2007.

[9] G. Liva, "Graph-Based Analysis and Optimization of Contention Resolution Diversity Slotted ALOHA," IEEE Transactions on Communications, Bd. 59, Nr. 2, pp. 477-487, 2011.

[10] M. Ghanbarinejad und C. Schlegel, "Irregular repetition slotted ALOHA with multiuser detection," in 10th Annual Conference on Wireless On-demand Network Systems and Services (WONS), Banff, 2013.

[11] L. Toni und P. Frossard, "Prioritized Random MAC Optimization Via Graph-Based Analysis," IEEE Transactions on Communications, Bd. 63, Nr. 12, pp. 5002-5013, 2015.

[12] D. Jakovetić, D. Bajović, D. Vukobratović und V. Crnojević, "Cooperative Slotted Aloha for Multi-Base Station Systems," IEEE Transactions on Communications, Bd. 63, Nr. 4, pp. 1443 - 1456, 2015.

[13] C. Stefanovic, P. Popovski und D. Vukobratovic, "Frameless ALOHA Protocol for Wireless Networks," IEEE Communications Letters , Bd. 16, Nr. 12, pp. 2087 - 2090, 2012.

[14] S. Ogata und K. Ishibashi, "Frameless ALOHA with multiple base stations," in 49th Asilomar Conference on Signals, Systems and Computers, Pacific Grove, 2015.

[15] K. R. Narayanan und H. D. Pfister, "Iterative collision resolution for slotted ALOHA: An optimal uncoordinated transmission policy," in 7th International Symposium on Turbo Codes and Iterative Information Processing (ISTC), Gothenburg, 2012.

[16] T. Yunzheng, L. Long, L. Shang und Z. Zhi, "A survey: Several technologies of non-orthogonal transmission for 5G," China Communications, Bd. 12, Nr. 10, pp. 1 - 15, 2015.

[17] E. Paolini, G. Liva und M. Chiani, "Coded Slotted ALOHA: A Graph-Based Method for Uncoordinated Multiple Access," IEEE Transactions on Information Theory , Bd. 61, Nr. 12, pp. 6815 - 6832, 2015.

[18] E. Paolini, C. Stefanovic, G. Liva und P. Popovski, "Coded random access: applying codes on graphs to design random access protocols," IEEE Communications Magazine, Bd. 53, Nr. 6, pp. 144 - 150, 2015.

[19] M. Shirvanimoghaddam, Y. Li, M. Dohler, B. Vucetic und S. Feng, "Probabilistic Rateless Multiple Access for Machine-to-Machine Communication," IEEE Transactions on Wireless Communications , Bd. 14, Nr. 12, pp. 6815 - 6826, 2015.

[20] A. S. Tehrani, A. G. Dimakis und M. J. Neely, "SigSag: Iterative Detection Through Soft Message-Passing," IEEE Journal of Selected Topics in Signal Processing , Bd. 5, Nr. 8, pp. 1512 - 1523, 2011.

[21] D. MacKay und R. Neal, "Near Shannon limit performance of low density parity check codes," Electronics Letters, Bd. 33, Nr. 6, pp. 457 - 458, 1997.

**Claims**

1. A receiver (200) for receiving encoded data from a transmitter ($230_1$) in a communication system having a plurality of transmitters ($230_1$ to $230_{Nu}$), the receiver (200) comprising:

   a decoder (201) having a demodulator (202) configured to demodulate a received signal (206), to obtain a sequence (210) of received symbols, at least a subset of received symbols of the sequence (210) of received symbols having information from transmissions from a plurality of transmitters ($230_1$ to $230_{Nu}$);
   wherein the decoder (201) is configured to reconstruct an encoded data bit sequence (212) into which the data from the transmitter ($230_1$) is coded based on the sequence (210) of received symbols and based on error correcting bits (214) corresponding to an error correction code - with which the data is encoded, by, for each bit of the encoded data bit sequence (210),
   in a first part of an iteration step,

      determining a first probability information describing a reliability of the bit of the encoded data bit sequence (212) given a corresponding received symbol of the sequence (210) of received symbols, and

determining a second probability information describing probabilities that the bit of the encoded data bit sequence (212) fulfills corresponding error correcting bits (214) of the error correcting code;

in a second part of the iteration step,
determining, based on the first probability information and the second probability information, a third probability information describing a probability that the current bit of the encoded data bit sequence (212) corresponds to an actual bit of the encoded data bit sequence (212) as transmitted by the transmitter ($230_1$);
wherein in a Tanner graph representation of the decoder (201),

the demodulator (202) configured to provide the sequence (210) of received symbols is represented by receiver check nodes,
the encoded data bit sequence (212) is represented by variable nodes, and
the error correcting code is represented by error correction check nodes (214),
wherein each variable node of the variable nodes is connected to only one single receiver check node of the receiver check nodes,

wherein the decoder (201) is configured to perform a joint decoding of receiver check nodes and error correction check nodes by passing
in the first part of the iteration step,

the first probability information from the receiver check nodes to the variable nodes, and
the second probability information from the error correcting check nodes to the variable nodes,

in the second part of the iteration step,
the third probability information from the variable nodes to both, the receiver check nodes and the error correction check nodes.

2. The receiver (200) according to the preceding claim, wherein the decoder (201) is configured to reconstruct the encoded data bit sequence (212), by, for each bit of the encoded data bit sequence (212),
in the first part of the iteration step,

the first probability information is updated based on the third probability information, and
the second probability information is updated based on the third probability information.

3. The receiver (200) according to one of the preceding claims, wherein the decoder (201) is configured to reconstruct the encoded data bit sequence (212), by, for each bit of the encoded data bit sequence (212),
in the second part of the iteration step,
the third probability information is updated based on the second probability information and the third probability information.

4. The receiver (200) according to one of the preceding claims, wherein the decoder (201) is configured to iteratively repeat the iteration step until a predefined termination criterion is reached or until a predefined number of iteration steps is reached.

5. The receiver according to the preceding claim, wherein the termination criterion specifies that the error correcting bits of the error correcting code (214) are fulfilled.

6. The receiver (200) according to claim 1, wherein the first probability information and the second probability information is transmitted simultaneously from the receiver check nodes (210) and error detection check nodes (214), respectively.

7. The receiver (200) according to one of the claims 1 to 6, wherein the first probability information and the second probability information are combined and processed at the variable nodes (212) resulting in an updated third probability information.

8. The receiver (200) according to one of the preceding claims, wherein the decoder (201) is configured to reconstruct the encoded data bit sequence (212), by, for each $j^{th}$ data bit $v_j$ of the encoded data bit sequence (212),
in the first part of the iteration step,

determining as first probability information a probability value $S_{j,i}$ describing a reliability of the ith bit $v_i$ of the encoded data bit sequence given a corresponding jth received symbol $s_j$ of the sequence of received symbols based on the equation

$$S_{j,i} = ln\left(\frac{\sum_{x_i \in X_{j,1} \subset X_j}\left[P(y = y_j|x_i) \cdot P(x_i)\right]}{\sum_{x_i \in X_{j,0} \subset X_j}\left[P(y = y_j|x_i) \cdot P(x_i)\right]}\right)$$

wherein $y_j \forall j = 1, \cdots, N_s$ represents the channel received signal at time slot $j$, $X_j \forall j = 1, \cdots, N_s$ is a set of possible vectors of all the collided bits of received symbol $s_j$ of the sequence of received symbols;
$X_{j,1} \forall j = 1, \cdots, N_s$ is the set of possible vectors of all the collided bits of received symbol $s_j$ of the sequence of received symbols that assume bit $v_i$ of the encoded data bit sequence is a 1,
$X_{j,0} \forall j = 1, \cdots, N_s$ is the set of possible vectors of all the collided bits of received symbol $s_j$ of the sequence of received symbols that assume bit $v_i$ of the encoded data bit sequence is a 0;
$P(x_i)$ is the apriori probability of the vector $x_i$.

9. The receiver (200) according to one of the preceding claims, wherein the decoder (201) is configured to reconstruct the encoded data bit sequence (212), by, for each ith data bit $v_i$ of the encoded data bit sequence (212),
in the first part of the iteration step,
determining as second probability information probability values $L_{j,i}$ describing probabilities that the ith bit $v_i$ of the encoded data bit sequence fulfills corresponding error correcting bits $l_j$ of the error correcting code based on the equation

$$L_{j,i} = -2\,tanh^{-1}\left(\prod_{i' \in B_j, i' \neq i} tanh\left(-V_{j,i'}/2\right)\right)$$

**wherein** $B_j \forall j = 1, \cdots, N_l$ represents a set of bits of the encoded data bit sequence related to error correcting bit $l_j$ of the error correcting code, and
$V_{i,i'} \forall j = 1, \cdots, N_l$, and $\forall i' = 1, \cdots, N_v$ represents the third probability information determined based on bit $v_{i'}$ of the encoded data bit sequence for bit $l_j$ of the error correcting code.

10. The receiver (200) according to claims 8 and 9, wherein the decoder (202) is configured to reconstruct the encoded data bit sequence (212), by, for each ith data bit $v_i$ of the encoded data bit sequence (212),
in the second part of the iteration step,

determining as third probability information probability values $V_{j,i}$ describing a probability that the current ith bit $v_i$ of the encoded data bit sequence corresponds to an actual bit of the encoded data bit sequence as transmitted by the transmitter based on the equation

$$V_{j,i}^{(L)} = \sum_{j' \in A_i, j' \neq j} L_{j',i} + \sum_{j'' \in C_i,} S_{j'',i}$$

for error correcting bits (214) of the error correcting code, and based on the equation

$$V_{j,i}^{(S)} = \sum_{j' \in A_i} L_{j',i} + \sum_{j'' \in C_i, j'' \neq j} S_{j'',i}$$

for the sequence or received symbols,
wherein $A_i \forall i = 1, \cdots, N_v$ represents a set of bits of the error correcting bits of the error correcting code related to bit $v_i$ of the encoded data bit sequence, wherein $C_i \forall i = 1, \cdots, N_v$ represents a set of symbols of the sequence of the received symbols related to bit $v_i$ of the encoded data bit sequence.

11. The receiver (200) according to one of the preceding claims, wherein the communication system is slotted ALOHA based communication system.

12. The receiver (200) according to one of the preceding claims, wherein the error correcting code is a low-density parity-check code.

13. A system (220), comprising:

a receiver (200) according to one of the claims 1 to 12; and
a transmitter ($230_1$) configured to transmit a signal comprising encoded data.

14. A method (260) for receiving encoded data from a transmitter in a communication system having a plurality of transmitters, the method comprising:

demodulating (262) a received signal, to obtain a sequence of received symbols, at least a subset of received symbols of the sequence of received symbols having information from transmissions from a plurality of transmitters;
reconstructing (264) an encoded data bit sequence into which the data from the transmitter is coded based on the sequence of received symbols and based on error correcting bits corresponding to an error correction code with which the data is encoded, by, for each bit of the encoded data bit sequence,
in a first part of an iteration step,

determining a first probability information describing a reliability of the bit of the encoded data bit sequence given a corresponding received symbol of the sequence of received symbols, and
determining a second probability information describing probabilities that the bit of the encoded data bit sequence fulfills corresponding error correcting bits of the error correcting code;

in a second part of the iteration step,
determining, based on the first probability information and the second probability information, a third probability information describing a probability that the current bit of the encoded data bit sequence corresponds to an actual bit of the encoded data bit sequence as transmitted by the transmitter,
wherein in a Tanner graph representation,

the step of demodulating the received signals or the sequence of received symbols is represented by receiver check nodes,
the encoded data bit sequence is represented by variable nodes, and
the error correcting code is represented by error correction check nodes,
wherein each variable node of the variable nodes is connected to only one receiver check node of the receiver check nodes,

wherein reconstructing (264) comprises performing a joint decoding of receiver check nodes and error correction check nodes by passing
in the first part of the iteration step,

the first probability information from the receiver check nodes to the variable nodes, and
the second probability information from the error correcting check nodes to the variable nodes,

in the second part of the iteration step,
the third probability information from the variable nodes to both, the receiver check nodes and the error correction check nodes.

15. Computer readable digital storage medium having stored thereon a computer program having a program code which, when run on a computer, causes the computer to perform the method according to claim 14.

**Patentansprüche**

1. Ein Empfänger (200) zum Empfangen von codierten Daten von einem Sender ($230_1$) in einem Kommunikationssystem mit einer Mehrzahl von Sendern ($230_{-1}$ bis $230_{Nu}$), wobei der Empfänger (200) folgende Merkmale aufweist:

einen Decoder (201) mit einem Demodulator (202), der dazu konfiguriert ist, ein empfangenes Signal (206) zu demodulieren, um eine Sequenz (210) von empfangenen Symbolen zu erhalten, wobei zumindest eine Teilmenge von empfangenen Symbolen der Sequenz (210) von empfangenen Symbolen Information aus Übertragungen von einer Mehrzahl von Sendern ($230_{-1}$ bis $230_{Nu}$) aufweist;

wobei der Decoder (201) dazu konfiguriert ist, eine codierte Datenbitsequenz (212) zu rekonstruieren, in die die Daten von dem Sender ($230_1$) codiert sind, auf der Basis der Sequenz (210) von empfangenen Symbolen und auf der Basis von Fehlerkorrekturbits (214), die einem Fehlerkorrekturcode entsprechen, mit dem die Daten codiert sind, durch, für jedes Bit der codierten Datenbitsequenz (210):

in einem ersten Teil eines Iterationsschritts,

Bestimmen einer ersten Wahrscheinlichkeitsinformation, die eine Zuverlässigkeit des Bits der codierten Datenbitsequenz (212) in Anbetracht eines entsprechenden empfangenen Symbols der Sequenz (210) von empfangenen Symbolen beschreibt, und
Bestimmen einer zweiten Wahrscheinlichkeitsinformation, die Wahrscheinlichkeiten dahingehend beschreibt, dass das Bit der codierten Datenbitsequenz (212) entsprechende Fehlerkorrekturbits (214) des Fehlerkorrekturcodes erfüllt;

in einem zweiten Teil des Iterationsschritts,
Bestimmen, auf der Basis der ersten Wahrscheinlichkeitsinformation und der zweiten Wahrscheinlichkeitsinformation, einer dritten Wahrscheinlichkeitsinformation, die eine Wahrscheinlichkeit dahingehend beschreibt, dass das aktuelle Bit der codierten Datenbitsequenz (212) einem tatsächlichen Bit der codierten Datenbitsequenz (212) entspricht, wie sie von dem Sender ($230_1$) gesendet wird;
wobei in einer Tanner-Diagramm-Darstellung des Decoders (201)

der Demodulator (202), der dazu konfiguriert ist, die Sequenz (210) von empfangenen Symbolen bereitzustellen, durch Empfängerprüfknoten dargestellt wird,
die codierte Datenbitsequenz (212) durch variable Knoten dargestellt wird, und
der Fehlerkorrekturcode durch Fehlerkorrekturprüfknoten (214) dargestellt wird,
wobei jeder variable Knoten der variablen Knoten mit nur einem einzelnen Empfängerprüfknoten der Empfängerprüfknoten verbunden ist,

wobei der Decoder (201) dazu konfiguriert ist, eine gemeinsame Decodierung von Empfängerprüfknoten und Fehlerkorrekturprüfknoten durchzuführen, indem derselbe,
in dem ersten Teil des Iterationsschritts,

die erste Wahrscheinlichkeitsinformation von den Empfängerprüfknoten zu den variablen Knoten weitergibt, und
die zweite Wahrscheinlichkeitsinformation von den Fehlerkorrekturprüfknoten zu den variablen Knoten weitergibt,

in dem zweiten Teil des Iterationsschritts,
die dritte Wahrscheinlichkeitsinformation von den variablen Knoten sowohl zu den Empfängerprüfknoten als auch zu den Fehlerkorrekturprüfknoten weitergibt.

2. Der Empfänger (200) gemäß dem vorhergehenden Anspruch, wobei der Decoder (201) dazu konfiguriert ist, die codierte Datenbitsequenz (212) zu rekonstruieren, indem, für jedes Bit der codierten Datenbitsequenz (212):
in dem ersten Teil des Iterationsschritts,

die erste Wahrscheinlichkeitsinformation auf der Basis der dritten Wahrscheinlichkeitsinformation aktualisiert wird, und
die zweite Wahrscheinlichkeitsinformation auf der Basis der dritten Wahrscheinlichkeitsinformation aktualisiert wird.

3. Der Empfänger (200) gemäß einem der vorhergehenden Ansprüche, wobei der Decoder (201) dazu konfiguriert ist, die codierte Datenbitsequenz (212) zu rekonstruieren, indem, für jedes Bit der codierten Datenbitsequenz (212):
in dem zweiten Teil des Iterationsschritts,
die dritte Wahrscheinlichkeitsinformation auf der Basis der zweiten Wahrscheinlichkeitsinformation und der dritten Wahrscheinlichkeitsinformation aktualisiert wird.

4.  Der Empfänger (200) gemäß einem der vorhergehenden Ansprüche, wobei der Decoder (201) dazu konfiguriert ist, den Iterationsschritt iterativ zu wiederholen, bis ein vordefiniertes Abbruchkriterium erreicht ist oder bis eine vordefinierte Anzahl von Iterationsschritten erreicht ist.

5.  Der Empfänger gemäß dem vorhergehenden Anspruch, wobei das Abbruchkriterium spezifiziert, dass die Fehlerkorrekturbits des Fehlerkorrekturcodes (214) erfüllt sind.

6.  Der Empfänger (200) gemäß Anspruch 1, wobei die erste Wahrscheinlichkeitsinformation und die zweite Wahrscheinlichkeitsinformation gleichzeitig von den Empfängerprüfknoten (210) beziehungsweise Fehlerdetektionsprüfknoten (214) übertragen werden.

7.  Der Empfänger (200) gemäß einem der Ansprüche 1 bis 6, wobei die erste Wahrscheinlichkeitsinformation und die zweite Wahrscheinlichkeitsinformation an den variablen Knoten (212) kombiniert und verarbeitet werden, was zu einer aktualisierten dritten Wahrscheinlichkeitsinformation führt.

8.  Der Empfänger (200) gemäß einem der vorhergehenden Ansprüche, wobei der Decoder (201) dazu konfiguriert ist, die codierte Datenbitsequenz (212) zu rekonstruieren, durch, für jedes j-te Datenbit $v_j$ der codierten Datenbitsequenz (212):
    in dem ersten Teil des Iterationsschritts,

    Bestimmen, als erste Wahrscheinlichkeitsinformation, eines Wahrscheinlichkeitswerts $S_{j,i}$, der eine Zuverlässigkeit des i-ten Bits $v_i$ der codierten Datenbitsequenz beschreibt, in Anbetracht eines entsprechenden j-ten empfangenen Symbols $s_j$ der Sequenz von empfangenen Symbolen, auf der Basis der folgenden Gleichung:

$$S_{j,i} = ln\left(\frac{\sum_{x_i \in X_{j,1} \subset X_j} \left[P(y = y_j|x_i) \cdot P(x_i)\right]}{\sum_{x_i \in X_{j,0} \subset X_j} \left[P(y = y_j|x_i) \cdot P(x_i)\right]}\right)$$

    wobei $y_j \forall j = 1, \cdots, N_s$ das Kanalempfangssignal in dem Zeitschlitz j darstellt,
    $X_j \forall j = 1, \cdots, N_s$ ein Satz von möglichen Vektoren aller kollidierten Bits des empfangenen Symbols $s_j$ der Sequenz von empfangenen Symbolen ist;
    $X_{j,1} \forall j = 1, \cdots, N_s$ der Satz von möglichen Vektoren aller kollidierten Bits des empfangenen Symbols $s_j$ der Sequenz von empfangenen Symbolen ist, die annehmen, dass das Bit $v_i$ der codierten Datenbitsequenz eine 1 ist,
    $X_{j,0} \forall j = 1, \cdots, N_s$ der Satz von möglichen Vektoren aller kollidierten Bits des empfangenen Symbols $s_j$ der Sequenz von empfangenen Symbolen ist, die annehmen, dass das Bit $v_i$ der codierten Datenbitsequenz eine 0 ist;
    $P(x_i)$ die apriori-Wahrscheinlichkeit des Vektors $x_i$ ist.

9.  Der Empfänger (200) gemäß einem der vorhergehenden Ansprüche, wobei der Decoder (201) dazu konfiguriert ist, die codierte Datenbitsequenz (212) zu rekonstruieren, durch, für jedes i-te Datenbit $v_i$ der codierten Datenbitsequenz (212):
    in dem ersten Teil des Iterationsschritts

    Bestimmen, als zweite Wahrscheinlichkeitsinformation, von Wahrscheinlichkeitswerten $L_{j,i}$, die Wahrscheinlichkeiten dahingehend beschreiben, dass das i-te Bit $v_i$ der codierten Datenbitsequenz entsprechende Fehlerkorrekturbits $l_j$ des Fehlerkorrekturcodes erfüllt, auf der Basis der folgenden Gleichung:

$$L_{j,i} = -2\, tanh^{-1}\left(\prod_{i' \in B_j, i' \neq i} tanh(-V_{j,i'}/2)\right)$$

    wobei $B_j \forall j = 1, \cdots, N_l$ einen Satz von Bits der codierten Datenbitsequenz in Bezug auf das Fehlerkorrekturbit $v_{i'}$ des Fehlerkorrekturcodes darstellt, und
    $V_{i,i'} \forall j = 1, \cdots, N_l$, and $\forall i' = 1, \cdots, N_v$ die dritte Wahrscheinlichkeitsinformation darstellt, die auf der Basis des Bits $v_{i'}$ der codierten Datenbitsequenz für das Bit $l_j$ des Fehlerkorrekturcodes bestimmt wird.

10. Der Empfänger (200) gemäß den Ansprüchen 8 und 9, wobei der Decoder (202) dazu konfiguriert ist, die codierte Datenbitsequenz (212) zu rekonstruieren, durch, für jedes i-te Datenbit $v_i$ der codierten Datenbitsequenz (212): in dem zweiten Teil des Iterationsschritts

Bestimmen, als dritte Wahrscheinlichkeitsinformation, von Wahrscheinlichkeitswerten $V_{j,i}$, die eine Wahrscheinlichkeit dahingehend beschreiben, dass das aktuelle i-te Bit $v_i$ der codierten Datenbitsequenz einem tatsächlichen Bit der codierten Datenbitsequenz entspricht, wie sie von dem Sender gesendet wird, auf der Basis der folgenden Gleichung:

$$V_{j,i}^{(L)} = \sum_{j' \in A_i, j' \neq j} L_{j',i} + \sum_{j'' \in C_i} S_{j'',i}$$

für Fehlerkorrekturbits (214) des Fehlerkorrekturcodes, und auf der Basis der folgenden Gleichung:

$$V_{j,i}^{(S)} = \sum_{j' \in A_i} L_{j',i} + \sum_{j'' \in C_i, j'' \neq j} S_{j'',i}$$

für die Sequenz oder empfangene Symbole,
wobei $A_i \forall i = 1, \cdots, N_v$ einen Satz von Bits der Fehlerkorrekturbits des Fehlerkorrekturcodes in Bezug auf das Bit $v_i$ der codierten Datenbitsequenz darstellt,
wobei $C_i \forall i = 1, \cdots, N_v$ einen Satz von Symbolen der Sequenz der empfangenen Symbole in Bezug auf das Bit $v_i$ der codierten Datenbitsequenz darstellt.

11. Der Empfänger (200) gemäß einem der vorhergehenden Ansprüche, wobei das Kommunikationssystem ein Synchronisiertes-ALOHA-basierendes Kommunikationssystem ist.

12. Der Empfänger (200) gemäß einem der vorhergehenden Ansprüche, wobei der Fehlerkorrekturcode ein Low-Density-Parity-Check-Code ist.

13. Ein System (220), das folgende Merkmale aufweist:

einen Empfänger (200) gemäß einem der Ansprüche 1 bis 12; und
einen Sender ($230_1$), der dazu konfiguriert ist, ein Signal zu senden, das codierte Daten aufweist.

14. Ein Verfahren (260) zum Empfangen von codierten Daten von einem Sender in einem Kommunikationssystem mit einer Mehrzahl von Sendern, wobei das Verfahren folgende Schritte aufweist:

Demodulieren (262) eines empfangenen Signals, um eine Sequenz von empfangenen Symbolen zu erhalten, wobei zumindest eine Teilmenge von empfangenen Symbolen der Sequenz von empfangenen Symbolen Information aus Übertragungen von einer Mehrzahl von Sendern aufweist;
Rekonstruieren (264) einer codierten Datenbitsequenz, in die die Daten von dem Sender codiert sind, auf der Basis der Sequenz von empfangenen Symbolen und auf der Basis von Fehlerkorrekturbits, die einem Fehlerkorrekturcode entsprechen, mit dem die Daten codiert sind, durch, für jedes Bit der codierten Datenbitsequenz:

in einem ersten Teil eines Iterationsschritts,

Bestimmen einer ersten Wahrscheinlichkeitsinformation, die eine Zuverlässigkeit des Bits der codierten Datenbitsequenz beschreibt, in Anbetracht eines entsprechenden empfangenen Symbols der Sequenz von empfangenen Symbolen, und
Bestimmen einer zweiten Wahrscheinlichkeitsinformation, die Wahrscheinlichkeiten dahingehend beschreibt, dass das Bit der codierten Datenbitsequenz entsprechende Fehlerkorrekturbits des Fehlerkorrekturcodes erfüllt;

in einem zweiten Teil des Iterationsschritts,
Bestimmen, auf der Basis der ersten Wahrscheinlichkeitsinformation und der zweiten Wahrscheinlichkeitsinformation, einer dritten Wahrscheinlichkeitsinformation, die eine Wahrscheinlichkeit dahingehend beschreibt, dass das aktuelle Bit der codierten Datenbitsequenz einem tatsächlichen Bit der codierten Datenbitsequenz entspricht, wie sie von dem Sender gesendet wird,
wobei in einer Tanner-Diagramm-Darstellung

der Schritt des Demodulierens der empfangenen Signale oder der Sequenz von empfangenen Symbolen durch Empfängerprüfknoten dargestellt wird,
die codierte Datenbitsequenz durch variable Knoten dargestellt wird, und
der Fehlerkorrekturcode durch Fehlerkorrekturprüfknoten dargestellt wird,
wobei jeder variable Knoten der variablen Knoten mit nur einem Empfängerprüfknoten der Empfängerprüfknoten verbunden ist,

wobei das Rekonstruieren (264) das Durchführen einer gemeinsamen Decodierung von Empfängerprüfknoten und Fehlerkorrekturprüfknoten aufweist, indem derselbe,
in dem ersten Teil des Iterationsschritts,

die erste Wahrscheinlichkeitsinformation von den Empfängerprüfknoten zu den variablen Knoten weitergibt, und
die zweite Wahrscheinlichkeitsinformation von den Fehlerkorrekturprüfknoten zu den variablen Knoten weitergibt,

in dem zweiten Teil des Iterationsschritts,
die dritte Wahrscheinlichkeitsinformation von den variablen Knoten sowohl zu den Empfängerprüfknoten als auch zu den Fehlerkorrekturprüfknoten weitergibt.

**15.** Ein computerlesbares digitales Speichermedium mit einem darauf gespeicherten Computerprogramm mit einem Programmcode zum Durchführen eines Verfahrens gemäß Anspruch 14, wenn dasselbe auf einem Computer läuft.

## Revendications

1. Récepteur (200) destiné à recevoir des données codées en provenance d'un émetteur ($230_1$) dans un système de communication présentant une pluralité d'émetteurs ($230_1$ à $230_{Nu}$), le récepteur (200) comprenant :

   un décodeur (201) présentant un démodulateur (202) configuré pour démoduler un signal reçu (206), afin d'obtenir une séquence (210) de symboles reçus, au moins un sous-ensemble de symboles reçus de la séquence (210) de symboles reçus présentant des informations en provenance de transmissions d'une pluralité d'émetteurs ($230_1$ à $230_{Nu}$) ;
   dans lequel le décodeur (201) est configuré pour reconstruire une séquence de bits de données codées (212) dans laquelle les données en provenance de l'émetteur ($230_1$) sont codées sur base de la séquence (210) de symboles reçus et sur base de bits de correction d'erreur (214) correspondant à un code de correction d'erreur - avec lequel les données sont codées, par les étapes suivantes, pour chaque bit de la séquence de bits de données codées (210),
   dans une première partie d'une étape d'itération,

   la détermination de premières informations de probabilité décrivant une fiabilité du bit de la séquence de bits de données codées (212) en fonction d'un symbole reçu correspondant de la séquence (210) de symboles reçus, et
   la détermination de deuxièmes informations de probabilité décrivant des probabilités que le bit de la séquence de bits de données codées (212) satisfasse des bits de correction d'erreur correspondants (214) du code de correction d'erreur ;

   dans une seconde partie de l'étape d'itération,
   la détermination, sur base des premières informations de probabilité et des deuxièmes informations de probabilité, de troisièmes informations de probabilité décrivant une probabilité que le bit en cours de la séquence de bits de données codées (212) corresponde à un bit réel de la séquence de bits de données codées (212) telle que transmise par l'émetteur ($230_1$) ;
   dans lequel dans une représentation graphique de Tanner du décodeur (201),

   le démodulateur (202) configuré pour fournir la séquence (210) de symboles reçus est représenté par des nœuds de contrôle de récepteur,
la séquence de bits de données codées (212) est représentée par des nœuds variables, et
le code de correction d'erreur est représenté par des nœuds de contrôle de correction d'erreur (214),
dans lequel chaque nœud variable parmi les nœuds variables est relié à un seul nœud de contrôle de récepteur parmi les nœuds de contrôle de récepteur,

dans lequel le décodeur (201) est configuré pour réaliser un décodage conjoint de nœuds de contrôle de récepteur et de nœuds de contrôle de correction d'erreur en faisant passer,
dans la première partie de l'étape d'itération,

les premières informations de probabilité en provenance des nœuds de contrôle de récepteur vers les nœuds variables, et
les deuxièmes informations de probabilité en provenance des nœuds de contrôle de correction d'erreur vers les nœuds variables,

dans la seconde partie de l'étape d'itération,
les troisièmes informations de probabilité en provenance des nœuds variables à la fois vers les nœuds de contrôle de récepteur et les nœuds de contrôle de correction d'erreur.

2. Récepteur (200) selon la revendication précédente, dans lequel le décodeur (201) est configuré pour reconstruire la séquence de bits de données codées (212) par l'étape suivante, pour chaque bit de la séquence de bits de données codées (212),
dans la première partie de l'étape d'itération,

les premières informations de probabilité sont mises à jour sur base des troisièmes informations de probabilité, et
les deuxièmes informations de probabilité sont mises à jour sur base des troisièmes informations de probabilité.

3. Récepteur (200) selon l'une des revendications précédentes, dans lequel le décodeur (201) est configuré pour reconstruire la séquence de bits de données codées (212) par l'étape suivante, pour chaque bit de la séquence de bits de données codées (212),
dans la seconde partie de l'étape d'itération,
les troisièmes informations de probabilité sont mises à jour sur base des deuxièmes informations de probabilité et des troisièmes informations de probabilité.

4. Récepteur (200) selon l'une des revendications précédentes, dans lequel le décodeur (201) est configuré pour répéter de manière itérative l'étape d'itération jusqu'à ce qu'un critère de terminaison prédéfini soit atteint ou jusqu'à ce qu'un nombre prédéfini d'étapes d'itération soit atteint.

5. Récepteur selon la revendication précédente, dans lequel le critère de terminaison spécifie que les bits de correction d'erreur du code de correction d'erreur (214) sont satisfaits.

6. Récepteur (200) selon la revendication 1, dans lequel les premières informations de probabilité et les deuxièmes informations de probabilité sont transmises simultanément en provenance des nœuds de contrôle de récepteur (210) et des nœuds de contrôle de détection d'erreur (214), respectivement.

7. Récepteur (200) selon l'une des revendications 1 à 6, dans lequel les premières informations de probabilité et les deuxièmes informations de probabilité sont combinées et traitées au niveau des nœuds variables (212) pour résulter en troisièmes informations de probabilité mises à jour.

8. Récepteur (200) selon l'une des revendications précédentes, dans lequel le décodeur (201) est configuré pour reconstruire la séquence de bits de données codées (212) par l'étape suivante, pour chaque $j^{ième}$ bit de données $v_j$ de la séquence de bits de données codées (212),
dans la première partie de l'étape d'itération,
la détermination en tant que premières informations de probabilité d'une valeur de probabilité $S_{j,i}$ décrivant une fiabilité du $i^{ième}$ bit $v_i$ de la séquence de bits de données codées en fonction d'un $j^{ième}$ symbole reçu correspondant $s_j$ de la séquence de symboles reçus sur base de l'équation

21

$$S_{j,i} = ln\left(\frac{\sum_{\boldsymbol{x}_i \in X_{j,1} \subset X_j} \left[P(y = y_j | \boldsymbol{x}_i) \cdot P(\boldsymbol{x}_i)\right]}{\sum_{\boldsymbol{x}_i \in X_{j,0} \subset X_j} \left[P(y = y_j | \boldsymbol{x}_i) \cdot P(\boldsymbol{x}_i)\right]}\right)$$

où $y_i \forall_j = 1, \cdots, N_s$ représente le signal de canal reçu à l'intervalle de temps $j$,

$X_j \forall_j = 1, \cdots, N_s$ est un ensemble de vecteurs possibles de tous les bits en collision du symbole reçu $s_j$ de la séquence de symboles reçus ;

$X_{j,1} \forall_j = 1, \cdots, N_s$ est l'ensemble de vecteurs possibles de tous les bits en collision du symbole reçu $s_j$ de la séquence de symboles reçus qui supposent que le bit $v_i$ de la séquence de bits de données codées est un 1,

$X_{j,0} \forall_j = 1, \cdots, N_s$ est l'ensemble de vecteurs possibles de tous les bits en collision du symbole reçu $s_j$ de la séquence de symboles reçus qui supposent que le bit $v_i$ de la séquence de bits de données codées est un 0 ;

$P(x_i)$ est la probabilité a priori du vecteur $x_i$.

9. Récepteur (200) selon l'une des revendications précédentes, dans lequel le décodeur (201) est configuré pour reconstruire la séquence de bits de données codées (212) par l'étape suivante, pour chaque i$^{ième}$ bit de données $v_i$ de la séquence de bits de données codées (212),

dans la première partie de l'étape d'itération,

la détermination en tant que deuxièmes informations de probabilité de valeurs de probabilité $L_{j,i}$ décrivant des probabilités que le i$^{ième}$ bit $v_i$ de la séquence de bits de données codées satisfasse des bits de correction d'erreur correspondants $l_j$ du code de correction d'erreur sur base de l'équation

$$L_{j,i} = -2 \, tanh^{-1}\left(\prod_{i' \in B_j, i' \neq i} tanh\left(-V_{j,i'}/2\right)\right)$$

où $B_j \forall_j = 1, \cdots, N_l$ représente un ensemble de bits de la séquence de bits de données codées liée au bit de correction d'erreur $l_j$ du code de correction d'erreur, et

$V_{j,i} \forall_j = 1, \cdots, N_l$ et $\forall_i' = 1, \cdots, N_v$ représentent les troisièmes informations de probabilité déterminées sur base du bit $v_{i'}$ de la séquence de bits de données codées pour le bit $l_j$ du code de correction d'erreur.

10. Récepteur (200) selon les revendications 8 et 9, dans lequel le décodeur (202) est configuré pour reconstruire la séquence de bits de données codées (212) par l'étape suivante, pour chaque i$^{ième}$ bit de données $v_i$ de la séquence de bits de données codées (212),

dans la seconde partie de l'étape d'itération,

la détermination en tant que troisièmes informations de probabilité de valeurs de probabilité $V_{j,i}$ décrivant une probabilité que le i$^{ième}$ bit en cours $v_i$ de la séquence de bits de données codées corresponde à un bit réel de la séquence de bits de données codées telle que transmise par l'émetteur sur base de l'équation

$$V_{j,i}^{(L)} = \sum_{j' \in A_i, j' \neq j} L_{j',i} + \sum_{j'' \in C_i,} S_{j'',i}$$

pour des bits de correction d'erreur (214) du code de correction d'erreur, et sur base de l'équation

$$V_{j,i}^{(S)} = \sum_{j' \in A_i} L_{j',i} + \sum_{j'' \in C_i, j'' \neq j} S_{j'',i}$$

pour la séquence de symboles reçus,

où $A_i \forall_i = 1, \cdots, N_v$ représente un ensemble de bits des bits de correction d'erreur du code de correction d'erreur liée au bit $v_i$ de la séquence de bits de données codées,

où $C_i \forall_i = 1, \cdots, N_v$ représente un ensemble de symboles de la séquence des symboles reçus liée au bit $v_i$ de la séquence de bits de données codées.

11. Récepteur (200) selon l'une des revendications précédentes, dans lequel le système de communication est un système de communication basé sur ALOHA crénelé.

**12.** Récepteur (200) selon l'une des revendications précédentes, dans lequel le code de correction d'erreur est un code de contrôle de parité à faible densité.

**13.** Système (220), comprenant :

un récepteur (200) selon l'une des revendications 1 à 12 ; et
un émetteur ($230_1$) configuré pour transmettre un signal comprenant des données codées.

**14.** Procédé (260) destiné à recevoir des données codées en provenance d'un émetteur dans un système de communication présentant une pluralité d'émetteurs, le procédé comprenant :

démoduler (262) un signal reçu, afin d'obtenir une séquence de symboles reçus, au moins un sous-ensemble de symboles reçus de la séquence de symboles reçus présentant des informations en provenance de transmissions d'une pluralité d'émetteurs ;
reconstruire (264) une séquence de bits de données codées dans laquelle les données en provenance de l'émetteur sont codées sur base de la séquence de symboles reçus et sur base de bits de correction d'erreur correspondant à un code de correction d'erreur avec lequel les données sont codées, par les étapes suivantes, pour chaque bit de la séquence de bits de données codées,
dans une première partie d'une étape d'itération,

déterminer des premières informations de probabilité décrivant une fiabilité du bit de la séquence de bits de données codées en fonction d'un symbole reçu correspondant de la séquence de symboles reçus, et
déterminer des deuxièmes informations de probabilité décrivant des probabilités que le bit de la séquence de bits de données codées satisfasse des bits de correction d'erreur correspondants du code de correction d'erreur ;

dans une seconde partie de l'étape d'itération,
déterminer, sur base des premières informations de probabilité et des deuxièmes informations de probabilité, des troisièmes informations de probabilité décrivant une probabilité que le bit en cours de la séquence de bits de données codées corresponde à un bit réel de la séquence de bits de données codées telle que transmise par l'émetteur,
dans lequel dans une représentation graphique de Tanner,

l'étape de démodulation des signaux reçus ou de la séquence de symboles reçus est représentée par des nœuds de contrôle de récepteur,
la séquence de bits de données codées est représentée par des nœuds variables, et
le code de correction d'erreur est représenté par des nœuds de contrôle de correction d'erreur,
dans lequel chaque nœud variable parmi les nœuds variables est relié à un seul nœud de contrôle de récepteur parmi les nœuds de contrôle de récepteur,

dans lequel la reconstruction (264) comprend la réalisation d'un décodage conjoint de nœuds de contrôle de récepteur et de nœuds de contrôle de correction d'erreur en faisant passer,
dans la première partie de l'étape d'itération,

les premières informations de probabilité en provenance des nœuds de contrôle de récepteur vers les nœuds variables, et
les deuxièmes informations de probabilité en provenance des nœuds de contrôle de correction d'erreur vers les nœuds variables,

dans la seconde partie de l'étape d'itération,
les troisièmes informations de probabilité en provenance des nœuds variables à la fois vers les nœuds de contrôle de récepteur et les nœuds de contrôle de correction d'erreur.

**15.** Support de stockage numérique lisible par ordinateur présentant un programme d'ordinateur stocké dessus présentant un code de programme qui, lorsqu'il est exécuté sur un ordinateur, permet à l'ordinateur de réaliser le procédé selon la revendication 14.

Fig. 1

Fig. 2

Fig. 3

Fig. 4

EP 3 676 977 B1

Fig. 5

Fig. 6

<u>260</u>

Demodulating a received signal, to obtain a sequence of received symbols, at least a subset of received symbols of the sequence of received symbols having information from transmissions from a plurality of transmitters; ~262

Reconstructing an encoded data bit sequence into which the data from the transmitter is coded based on the sequence of received symbols and based on error correcting bits corresponding to an error correction code with which the data is encoded, by, for each bit of the encoded data bit sequence, ~264

in a first part of an iteration step,

determining a first probability information describing a reliability of the bit of the encoded data bit sequence given a corresponding received symbol of the sequence of received symbols, and

determining probability information describing probabilities that the bit of the encoded data bit sequence fulfills corresponding error correcting bits of the error correcting code; ~266

in a second part of the iteration step,

determining based on the first probability information and the second probability information, a third probability information describing a probability that the current bit of the encoded data bit sequence corresponds to an actual bit of the encoded data bit sequence as transmitted by the transmitter. ~268

Fig. 7

Fig. 8

Fig. 9

**REFERENCES CITED IN THE DESCRIPTION**

**Non-patent literature cited in the description**

- **C. KISSLING** ; **F. CLAZZER**. LDPC code performance and optimum code rate for Contention Resolution Diversity ALOHA. *IEEE Global Communications Conference (GLOBECOM)*, 2013
- **F. CLAZZER** ; **C. KISSLING**. Enhanced Contention Resolution Aloha - ECRA. *Proceedings of 2013 9th International ITG Conference on Systems, Communication and Coding (SCC)*, 2013
- **A. MUNARI** ; **F. CLAZZER** ; **G. LIVA**. Multi-receiver Aloha systems - a survey and new results. *IEEE International Conference on Communication Workshop (ICCW)*, 2015
- **A. MUNARI** ; **M. HEINDLMAIER** ; **G. LIVA**. The throughput of slotted aloha with diversity. *51st Annual Allerton Conference on Communication, Control, and Computing (Allerton), Monticello*, 2013
- **M. KHABBAZIAN** ; **F. KUHN** ; **N. LYNCH** ; **M. MÉDARD** ; **A. PARANDEHGHEIBI**. MAC design for analog network coding. *FOMC '11 Proceedings of the 7th ACM ACM SIGACT/SIGMOBILE International Workshop on Foundations of Mobile Computing*, 09 June 2011, 42-51
- **L. LU, L. YOU** ; **S. C. LIEW**. Network-Coded Multiple Access. *IEEE Transactions on Mobile Computing*, 2014, vol. 13 (12), 2853-2869
- **S. PFLETSCHINGER** ; **M. NAVARRO** ; **G. COCCO**. Interference cancellation and joint decoding for collision resolution in slotted ALOHA. *International Symposium on Network Coding (NetCod)*, 2014
- **E. CASINI** ; **R. D. GAUDENZI** ; **O. D. R. HERRERO**. Contention Resolution Diversity Slotted ALOHA (CRDSA): An Enhanced Random Access Schemefor Satellite Access Packet Networks. *IEEE Transactions on Wireless Communications*, 2007, vol. 6 (4), 1408-1419
- **G. LIVA**. Graph-Based Analysis and Optimization of Contention Resolution Diversity Slotted ALOHA. *IEEE Transactions on Communications*, 2011, vol. 59 (2), 477-487
- **M. GHANBARINEJAD** ; **C. SCHLEGEL**. Irregular repetition slotted ALOHA with multiuser detection. *10th Annual Conference on Wireless On-demand Network Systems and Services (WONS)*, 2013

- **L. TONI** ; **P. FROSSARD**. Prioritized Random MAC Optimization Via Graph-Based Analysis. *IEEE Transactions on Communications*, 2015, vol. 63 (12), 5002-5013
- Cooperative Slotted Aloha for Multi-Base Station Systems. *IEEE Transactions on Communications*, 2015, vol. 63 (4), 1443-1456
- **C. STEFANOVIC** ; **P. POPOVSKI** ; **D. VUKOBRATOVIC**. Frameless ALOHA Protocol for Wireless Networks. *IEEE Communications Letters*, 2012, vol. 16 (12), 2087-2090
- **S. OGATA** ; **K. ISHIBASHI**. Frameless ALOHA with multiple base stations. *49th Asilomar Conference on Signals, Systems and Computers, Pacific Grove*, 2015
- **K. R. NARAYANAN** ; **H. D. PFISTER**. Iterative collision resolution for slotted ALOHA: An optimal uncoordinated transmission policy. *7th International Symposium on Turbo Codes and Iterative Information Processing (ISTC)*, 2012
- **T. YUNZHENG** ; **L. LONG** ; **L. SHANG** ; **Z. ZHI**. A survey: Several technologies of non-orthogonal transmission for 5G. *China Communications*, 2015, vol. 12 (10), 1-15
- **E. PAOLINI** ; **G. LIVA** ; **M. CHIANI**. Coded Slotted ALOHA: A Graph-Based Method for Uncoordinated Multiple Access. *IEEE Transactions on Information Theory*, 2015, vol. 61 (12), 6815-6832
- **E. PAOLINI** ; **C. STEFANOVIC** ; **G. LIVA** ; **P. POPOVSKI**. Coded random access: applying codes on graphs to design random access protocols. *IEEE Communications Magazine, Bd.*, 2015, vol. 53 (6), 144-150
- **M. SHIRVANIMOGHADDAM** ; **Y. LI** ; **M. DOHLER** ; **B. VUCETIC** ; **S. FENG**. Probabilistic Rateless Multiple Access for Machine-to-Machine Communication. *IEEE Transactions on Wireless Communications*, 2015, vol. 14 (12), 6815-6826
- **A. S. TEHRANI** ; **A. G. DIMAKIS** ; **M. J. NEELY**. SigSag: Iterative Detection Through Soft Message-Passing. *IEEE Journal of Selected Topics in Signal Processing*, 2011, vol. 5 (8), 1512-1523
- **D. MACKAY** ; **R. NEAL**. Near Shannon limit performance of low density parity check codes. *Electronics Letters*, 1997, vol. 33 (6), 457-458